# EUROPEAN PATENT APPLICATION

(11) **EP 4 411 386 A1**
(43) Date of publication of application: **07.08.2024**
(21) Application number: 22876623.4
(22) Date of filing: 24.06.2022
(51) Int. Cl.: G01N 35/10, G01N 35/00

(54) **METHOD FOR PROCESSING AND ANALYZING SAMPLE IN MOLECULAR DIAGNOSTIC SYSTEM**

(30) Priority: 30.09.2021 KR 20210130221
(71) Applicant: Seegene, Inc., Seoul 05548 (KR)
(72) Inventor: PARK, Sang Jong, Seoul 05059 (KR)
(74) Representative: Viering, Jentschura & Partner mbB Patent- und Rechtsanwälte
(86) International application number: PCT/KR2022/009047
(87) International publication number: WO 2023/054848

(57) **Abstract**

The present disclosure relates to a method for processing and analyzing a sample in a molecular diagnostic system including a plurality of devices. According to the processing and analyzing method of the present disclosure, a reaction vessel moves between the sample analysis unit and the sample preparation unit through two local openings opened locally, and a gate-type local opening is provided to minimize the possibility of contamination inside the sample analysis unit and the sample preparation unit.

## Description

### Technical field

The present disclosure relates to a method for processing a sample in an analyzable state and analyzing it in a molecular diagnostic system.

### Background technology

Nucleic acid amplification has been suggested as an essential process for a wide range of methods in molecular biology. For example, Miller, H. I. et al. (WO 89/06700) discloses a method for amplifying a nucleic acid sequence comprising hybridizing a promoter/primer sequence to target single-stranded DNA ("ssDNA"), and then transcribing many copies of the RNA of the sequence. Other known nucleic acid amplification methods include a transcription-based amplification system (Kwoh, D. et al., Proc. Natl. Acad. Sci. U.S.A., 86:1173(1989); and Gingeras T.R. et al., WO 88/10315).

The most frequently used nucleic acid amplification method known as a polymerase chain reaction (hereinafter, referred to as "PCR") includes a repeated cycle process of denaturation of double-stranded DNA, oligonucleotide primer annealing to a DNA template, and primer extension by a DNA polymerase (Mullis et al., U.S. Pat. Nos. 4683195, 4683202 and 4800159; Saiki et al., (1985) Science 230, 1350-1354).

PCR-based techniques are widely used in scientific applications or methods in the field of biological and medical research as well as amplification of a target DNA sequence, and include, for example, reverse transcriptase PCR (RT-PCR), fractional display PCR (DD-PCR), cloning of known or unknown genes by PCR, fast amplification (RACE) of the cDNA end, arbitrary priming PCR (AP-PCR), multiplex PCR, SNP genome typing, and PCR-based genome analysis (McPherson and Moller, (2000). BIOS Scientific Publishers, Springer-Verlag New York Berlin Heidelberg, NY).

The PCR-based techniques described above determine the presence of a target nucleic acid in a sample by amplifying and detecting the target nucleic acid of interest. In particular, where the target nucleic acid is associated with a particular disease (e.g., where the target nucleic acid is derived from a particular pathogen), the presence of the target nucleic acid may help diagnose the disease risk in the subject.

In order to confirm whether a target nucleic acid is present in a sample by amplifying and detecting the target nucleic acid, a thermal circulation mechanism for amplifying the nucleic acid and an optical mechanism for detecting the amplified nucleic acid are required. In the related art, a thermal cycler mechanism was performed in a thermal cycler, and an optical mechanism was performed in an electrophoresis device, but as a RT-PCR device capable of performing real-time PCR was developed, amplification and detection of nucleic acid are performed in one device.

In addition, in order to amplify and detect a target nucleic acid of interest, PCR based techniques require the use of reagents for target nucleic acid detection, including oligonucleotides that specifically hybridize to the target nucleic acid (e.g., primers and/or probes), labels, DNA polymerases, dNTP, Mg ions and buffers, etc. There is a need for a preparation process to prepare samples for nucleic acid amplification and detection using the reagents for target nucleic acid detection, and the preparation process is carried out in a liquid handling device.

Therefore, the sample on which the preparation process for nucleic acid amplification and detection is performed is moved from the liquid handling device to the RT-PCR device by the user who performs the experiment, and then the target nucleic acid included in the sample is amplified and detected.

However, when the user directly moves the prepared sample to the RT-PCR device, there is a problem in that contamination of the sample or contamination of the user by the sample may occur during the movement. Further, there is a problem in that the user must wait to move the sample from the preparation device while the sample preprocessing is performed in the preparation device. This is because a sample including an enzyme for detection should immediately perform a reaction for detection in the RT-PCR device, and when the sample is left at room temperature, a non-specific reaction by the enzyme may be performed.

There is a need for a new analyzing method and system to overcome this problem.

Throughout this application, various patents and publications are referenced and citations are provided in parentheses. The disclosure of these patents and publications in their entities are hereby incorporated by references into this application in order to more fully describe this invention and the state of the art to which this invention pertains.

### Summary of the invention

### Problems to be solved

The present inventors have made efforts to develop a molecular diagnostic system capable of securing user convenience and safety while maintaining independence of each device by using existing molecular diagnostic devices, and to establish a process by which the molecular diagnostic system processes and analyzes samples in one step. As a result, the present inventors have developed a sample processing and analyzing process for a molecular diagnostic system in which the movement of a reaction vessel between an analysis device and a liquid handling device is stably performed using a transport device without impairing the independence of the analysis device and the liquid handling device.

Accordingly, an object of the present disclosure is to provide a method for processing and analyzing a sample in a molecular diagnostic system.

Another object and advantage of the present disclosure will become more apparent from the following examples, claims and drawings.

### Means for solving problems

According to an aspect of the present disclosure, there is provided a method for processing and analyzing a sample in a molecular diagnostic system comprising:
(a) preparing an analysis sample in a reaction vessel using a liquid handling device of a sample preparation unit of the molecular diagnostic system; wherein the molecular diagnostic system comprises a sample preparation unit, a sample analysis unit, and a transport device; wherein the sample preparation unit, the sample analysis unit, and the transport device are enclosed; wherein the sample preparation unit and the sample analysis unit are aligned such that the reaction vessel is transportable from the sample preparation unit to the sample analysis unit by the transport device; (b) transporting the reaction vessel from the sample preparation unit to the sample analysis unit by the transport device through a passage formed by a first local opening of the sample analysis unit and a second local opening of the sample preparation unit; and (c) amplifying and analyzing the analysis sample accommodated in the reaction vessel in the sample analysis unit; wherein the second local opening of the sample preparation unit is located at a lower surface or a side surface of the sample preparation unit; wherein the first local opening of the sample analysis unit is located at an upper surface or a side surface of the sample analysis unit; wherein the first local opening of the sample analysis unit is a gate-type opening, and is opened during the transporting step of step (b), and closed during the sample preparation and sample analysis of steps (a) and (c).

### Effects of the invention

The features and advantages of the present disclosure are summarized as follows.
(1) According to the processing and analyzing method of the present disclosure, a reaction vessel moves between the sample analysis unit and the sample preparation unit through two local openings opened locally, and a gate-type local opening is provided so as to minimize the possibility of contamination inside the sample analysis unit and the sample preparation unit.
(2) According to the method of an embodiment of the present disclosure, contamination of the reaction vessel can be prevented by controlling the operation of the ventilation apparatus according to the movement path of the reaction vessel.
(3) According to the method of an embodiment of the present disclosure, the step of processing a sample may be monitored, and the reaction vessel may be safely transported in a timely manner, even when there is no direct mutual control between the liquid handling device and the transport device.
(4) According to the method of an embodiment of the present disclosure, it is possible to monitor a reaction vessel transport state and transport the reaction vessel in a timely and safe manner without granting a direct mutual control authority between the sample analysis device and the transport device.

### Brief description of drawings

FIG. 1 is a front view illustrating a molecular diagnostic system according to the present disclosure.
FIG. 2 is a right-side view illustrating a molecular diagnostic system according to the present disclosure.
FIG. 3 is an exemplary view illustrating an operational connection of a molecular diagnostic system according to an embodiment of the present disclosure.
FIG. 4 is an internal front view illustrating a molecular diagnostic system of the present disclosure.
FIG. 5 is a perspective view illustrating a sample preparation unit of a molecular diagnostic system according to an embodiment of the present disclosure.
FIG. 6 is a perspective view illustrating a sample analysis unit of the molecular diagnostic system according to an embodiment of the present disclosure.
FIG. 7 is a perspective view illustrating door device of a first local opening of a sample analysis unit according to an embodiment of the present disclosure.
FIG. 8 is an internal perspective view illustrating a sample analysis unit of the molecular diagnostic system according to an embodiment of the present disclosure.
FIG. 9 is a perspective view illustrating the lift module of the sample analysis unit according to an embodiment of the present disclosure.
FIG. 10 is a perspective view illustrating the crane module of the sample analysis unit according to an embodiment of the present disclosure.
FIG. 11 is a perspective view illustrating a rotation component of a crane module according to another embodiment of the present disclosure.
FIG. 12 is a perspective view illustrating an automated sealer of a sample analysis unit according to an embodiment of the present disclosure.
FIG. 13 is a perspective view illustrating a sample analysis device of a sample analysis unit according to an embodiment of the present disclosure.
FIG. 14 is a perspective view illustrating a liquid waste collection bin and an analysis sample vessel retrieval container of a sample analysis unit according to an embodiment of the present disclosure.
FIG. 15 is an exemplary view illustrating the operation of the lift module according to an embodiment of the present disclosure.
FIG. 16 is a first exemplary view illustrating the horizontal extension movement operation of the lift module in the sample analysis unit according to an embodiment of the present disclosure.
FIG. 17 is a second exemplary view illustrating the horizontal extension movement operation of the lift module in the sample analysis unit according to an embodiment of the present disclosure.
FIG. 18 is a perspective view illustrating the horizontal extension movement of the lift module in the sample analysis unit according to an embodiment of the present disclosure.
FIG. 19 is an exemplary view illustrating that a crane module according to an embodiment transports an analysis sample vessel, which is a reaction vessel, from a lift module.
FIG. 20 is an exemplary view illustrating that a crane module according to an embodiment of the present disclosure mounts an analysis sample vessel to an automated sealer.
FIG. 21 is an exemplary view illustrating that a crane module according to an embodiment of the present disclosure mounts an analysis sample vessel to a sample analysis device.
FIG. 22 is an exemplary view illustrating that a crane module according to an embodiment of the present disclosure loads an analysis sample vessel into an analysis sample vessel retrieval container.
FIG. 23 is an exemplary diagram illustrating that an analysis sample vessel is collected in an analysis sample vessel retrieval container according to another embodiment of the present disclosure.
FIG. 24 is a plan view illustrating a position where an analysis sample vessel is moved by a crane module in the sample analysis unit according to an embodiment of the present disclosure.
FIG. 25 is a perspective view illustrating a position at which an analysis sample vessel is moved by a crane module in the sample analysis unit according to an embodiment of the present disclosure.
FIG. 26 is a plan view illustrating the arrangement of a sealer in a sample analysis unit according to another embodiment of the present disclosure.
FIG. 27 is a layout diagram illustrating that the components of the sample preparation unit according to an embodiment of the present disclosure are located on the deck.
FIG. 28 is a flowchart illustrating an operation method of the molecular diagnostic system according to an embodiment of the present disclosure.
FIG. 29 shows the inside of a sample analysis unit in which a ventilation apparatus according to an embodiment of the present disclosure is disposed.

### Detailed description of the Invention

Hereinafter, the present disclosure will be described in more detail with reference to the embodiments of the present disclosure. These embodiments are provided only to describe the present disclosure in more detail, and it will be apparent to those skilled in the art that the scope of the present disclosure is not limited by these embodiments according to the gist of the present disclosure.

In addition, terms such as first, second, A, B, (a), (b), (i), and (ii) may be used in describing the elements of the present disclosure. The term is used only to distinguish the elements from other elements, and the nature, sequence, or order of the corresponding elements is not limited by the term. When an element is described as being "connected", "coupled", or "joined" to another element, the element may be directly connected or joined to the other element, but it should be understood that other elements may be "connected", "coupled", or "joined" between the respective elements.

The present inventors have made efforts to develop a molecular diagnostic system capable of securing user convenience and safety while maintaining independence of each device by using existing molecular diagnostic devices, and to establish a process by which the molecular diagnostic system can process and analyze a sample in one step. As a result, the present inventors have developed a sample processing and analyzing process for a molecular diagnostic system in which the movement of a reaction vessel between an analysis device and a liquid handling device is stably performed using a transport device without impairing the independence of the analysis device and the liquid handling device.

The present disclosure relates to a method for processing and analyzing a sample in a molecular diagnostic system.

Molecular diagnosis refers to acquiring desired information by applying molecular biological technology for analyzing biological markers included in genetic information or a protein to a medical test. The biological marker refers to a target analyte, and may be, for example, a target nucleic acid sequence or an amino acid sequence. The desired information may be information on the presence, absence, or amount of the biological marker.

A molecular diagnostic system refers to a device that can be used for such molecular diagnosis. The molecular diagnostic system includes: a sample preparation unit for preparing an analysis sample including or presumed to include an analyte; and a sample analysis unit for amplifying a nucleic acid having a specific nucleotide sequence in the prepared analysis sample and detecting the amplified nucleic acid. The molecular diagnostic system characterized by including a transport device and at least one local passthrough cavity for operatively connecting the sample preparation unit and the sample analysis unit.

As used herein, the term "sample" refers to a material including or presumed to include an analyte.

The biological sample may include, but is not limited to, viruses, bacteria, tissues, cells, blood (including whole blood, plasma, and serum), lymph, bone marrow fluid, sputum, swab, aspiration, bronchial lavage fluid, bronchial alveolar lavage fluid, nasal lavage fluid, milk, urine, feces, ocular fluid, saliva, semen, brain extract, cerebrospinal fluid (SCF), arthroid fluid, appendage, spleen and tonsil tissue extract, amniotic fluid, and ascites.

The sample may also include naturally occurring nucleic acid molecules and synthetic nucleic acid molecules isolated from a biological source.

In an embodiment, the term "sample" may include a substance used for the preservation, processing, detection, and the like of the sample. The "sample" may include an amplification reagent, a detection reagent, a preservative, water, deionized water, a saline solution, a pH buffer, an acidic solution, and an additional material such as a basic solution, but is not limited thereto.

The term "raw sample" used herein may be used to refer to a sample before it is used in a sample processing device for analysis.

The term "raw sample" used herein may be used to indicate a sample before being processed in a preparation device for sample preparation.

The term "analysis sample" used herein may be used to refer to intermediates including analytes prepared during the several steps of processing the sample for analysis.
The analysis sample may be used to indicate samples prepared during the processing and analysis steps in the sample preparation unit and the sample analysis unit. In particular, the analysis sample may be used to represent a sample to be analyzed in the sample analysis unit.

As used herein, the term "specimen" may refer to an object to be analyzed that is collected from food, soil, air, water, or living organisms. In general, a specimen includes a sputum, blood, urine, stool, etc. A specimen container including a specimen may include a specimen collection composition for collecting a specimen and/or a specimen transport medium. The medium for transporting a sample performs a deactivation function due to lysis of an infectious pathogen and a stabilization function of nucleic acid materials released from the disrupted pathogen. The term "specimen" may be interchangeably used with the term "sample".

An analyte refers to a substance to be analyzed. The analysis may mean, for example, obtaining information on the presence, content, concentration, sequence, activity, or characteristic of the analyte in a sample. Analytes may include a variety of substances (e.g., biological substances and non-biological substances such as compounds). Specifically, the analytes may include biological materials such as nucleic acid molecules (e.g., DNA and RNA), proteins, peptides, carbohydrates, lipids, amino acids, biological compounds, hormones, antibodies, antigens, metabolites, and cells. According to an embodiment of the present disclosure, the analyte may be a nucleic acid molecule.

When the analyte to be analyzed herein is a nucleic acid molecule, the nucleic acid may be extracted from a specimen through a nucleic acid extraction process known in the art (See: Sambrook, J. et al., Molecular Cloning. A Laboratory Manual, 3rd ed. Cold Spring Harbor Press (2001)). The nucleic acid extraction process may vary depending on the type of specimen. In addition, when the extracted nucleic acid is RNA, a reverse transcription process for synthesizing cDNA may be additionally performed (See: Sambrook, J. et al., Molecular Cloning. A Laboratory Manual, 3rd ed. Cold Spring Harbor Press (2001)).

One or more types of analytes may be included in the sample, and a plurality of analysis samples for detection may be prepared for detection thereof.

The sample preparation unit of the molecular diagnostic system of the present disclosure prepares an analysis sample. The sample preparation unit may include a sample preparation device and a housing in which the sample preparation device is installed.

In an embodiment of the present disclosure, the sample preparation unit may be formed of a sample preparation device.

In another embodiment of the present disclosure, the sample preparation unit may include a housing and a sample preparation device inside the housing.

The sample preparation unit may provide the reaction vessel inside thereof to the sample analysis unit. A second local opening is formed in the sample preparation unit so as to provide the reaction vessel in the sample preparation unit to the sample analysis unit. The second local opening may be formed in a housing of the sample preparation device or the sample preparation unit.

The sample preparation unit prepares or preprocesses a sample so that the sample analysis device can proceed with a process for identification. According to an embodiment of the present disclosure, the sample preparation device may be, for example, an extraction device for separating a nucleic acid or a polypeptide from a sample or a setup device for mixing the separated nucleic acid or the polypeptide with a reagent required for the analysis so that the sample analysis device may perform a desired analysis. At least one of the target materials handled by the extraction device or the setup device may be a liquid sample. At least one of the reagents used in the extraction device and the setup device may be a liquid material. Accordingly, the sample preparation device of the present disclosure may be a liquid handling device.

The sample preparation device of the present disclosure provides a reaction vessel including a sample analyzable in a sample analysis device.

The sample preparation device of the present disclosure may be a device having a form including a housing. In addition, at least one passthrough cavity through which the internal reaction vessel may be taken out may be formed in the housing of the sample preparation device.

The sample analysis unit analyzes the analysis sample accommodated in the reaction vessel transported from the sample preparation unit. Specifically, the sample analysis unit analyzes the sample and provides information on the presence or amount of an analyte in the sample. The sample analysis unit includes an analysis device. The sample analysis unit may include an analysis device for identifying genetic information (for example, a nucleic acid amplification device, a sequencing device, a DNA chip system) and/or an analysis device for identifying amino acid sequence information (for example, an antibody-based analysis device).

The sample analysis unit may also include an automated sealer.

In the present disclosure, the transport device may be used to include the lift module and the crane module. The lift module operates to move the reaction vessel into the sample analysis unit, and the crane module operates to move the reaction vessel moved into the sample analysis unit in the sample analysis unit.

The reaction vessel may be moved from the sample preparation unit to the inside of the sample analysis unit by the transport device. To this end, a local opening is formed in the sample preparation unit and the sample analysis unit.

The sample analysis unit may include a sample analysis device and a housing in which the sample analysis device is installed. Alternatively, the sample analysis unit may be a sample analysis device.

One or more sample analysis devices used to analyze the analysis samples may be provided inside of the sample analysis unit.

As used herein, the term "sample preparation device" refers to a device for preparing an analysis sample that includes or is presumed to include an analyte.

In an embodiment of the present disclosure, the sample preparation unit may be a sample preparation device.

In another embodiment of the present disclosure, the sample preparation unit may include a sample preparation device.

The sample preparation device automatically performs a sample preparation process used in detecting an analyte (for example, a target nucleotide sequence) using a micro robot, wherein the sample preparation process in the present disclosure includes a process of extracting nucleic acids from a specimen, preparing a reaction mixture for amplification (for example, a reaction solution for polymerase chain reaction (PCR)), and preparing a detection sample in which the reaction mixture and the extracted nucleic acid are mixed.

When the sample preparation device does not include a nucleic acid extraction module, nucleic acid extraction from the specimen may be performed using a separate device.

Nucleic acid extraction may be performed using a nucleic acid extraction module to extract nucleic acid from a specimen when the analyte to be analyzed herein is a nucleic acid.

That is, when the preparation work to be performed in the sample preparation device is the preparation of a nucleic acid extract, actions that consequently lead to collecting separated nucleic acids should be performed through a series of actions for separation and purification of nucleic acids, starting from actions such as fractionating a specimen in a container in which the specimen is accommodated, dispensing a solution for cell lysis into the fractionated specimen, heating, and the like. The preparation of the nucleic acid extract may be performed through a nucleic acid extraction module included in the sample preparation device.

According to an embodiment of the present disclosure, a magnetic bead-based method using a magnetic bead capable of binding to a nucleic acid and eluting the bound nucleic acid is frequently used in a process of extracting nucleic acids from a specimen. The magnetic bead-based automated nucleic acid extraction method may include a liquid transfer method and a bead transfer method according to the type of a process of eluting nucleic acids bound to magnetic beads.

In addition, the sample preparation device may perform a task of preparing a reaction mixture for nucleic acid amplification. In an embodiment of the present disclosure, the sample preparation device may simultaneously perform an operation of preparing a nucleic acid extract and an operation of preparing a reaction mixture for nucleic acid amplification.

The sample preparation device performs a sample preparation process, including the nucleic acid extraction from a specimen, the preparation of a reaction for amplification, and the preparation of a reaction mixture in which they are mixed. The preparation process of the sample in the sample preparation device is implemented through a control device (not shown) for controlling the sample preparation device, and an operation of the preparation process of each sample is performed by the control device performing control of each component.

The control device may be configured to be embedded in the sample preparation device, or may be provided as a separate device and connected to the preparation device through a network.

The control device according to the present disclosure is a software control type. The control method of the sample preparation device may be controlled by software. Methods implemented as software or algorithms may be stored on a computer-readable recording medium as computer-readable codes or program instructions executable on a processor.

Examples of the computer-readable recording medium include a magnetic storage medium (e.g., read-only memory (ROM), random access memory (RAM), floppy disk, hard disk, etc.) and an optical reading medium (e.g., CD-ROM, Digital Versatile Disc (DVD), etc.). The computer-readable recording medium may be distributed over network coupled computer systems so that the computer-readable code is stored and executed in a distributed fashion. The medium may be readable by a computer, stored in a memory, and executed by a processor.

The sample preparation device according to the disclosure is an automated liquid handling device. The automated liquid handling device can automatically and programmatically aspirate and/or dispense a desired amount of reagent, sample, or other liquid from a designated container for automation of a chemical or biochemical laboratory. Various components of automated liquid handling devices are known to skilled people in the art.

All components of the sample preparation device are designed as an integrated device and located within the system housing.

In an embodiment of the present disclosure, the sample preparation device may use products such as "Microlab VANTAGE", "Microlab STAR", "Microlab NIMBUS", or "Microlab Prep" of Hamilton Company (see https://www.hamiltoncompany.com/automated-liquid-handling/platforms).

As used herein, the term "sample analysis device" refers to a device used for qualitative or quantitative analysis of an analyte. The terms "sample analysis device" and "analysis device" are same meaning and may be used interchangeably.

Sample analysis includes detecting the presence of an analyte and measuring the amount of the analyte.

The sample analysis device may refer to a device that amplifies a nucleic acid having a specific nucleotide sequence and detects the amplified nucleic acid.

The sample analysis device may include an optical device including a light source and a photodetector.

The sample analysis device may include a device capable of heating or cooling the analysis sample through temperature control.

The sample analysis device may include a thermal cycler performing a nucleic acid amplification reaction through temperature control.

The sample analysis device may include a nucleic acid amplifier capable of amplifying a nucleic acid.

With the sample analysis device, nucleic acid may be amplified in various methods. The method may include ligase chain reaction (LCR) (see Wiedmann M, et al., "Ligase chain reaction (LCR)- overview and applications." PCR Methods and Applications 1994 Feb;3(4):S51-64), gap filling LCR (GLCR) (see WO 90/01069, EP 439182 and WO 93/00447), Qbeta replicase amplification (Q-beta) (see Cahill P, et al., Clin Chem., 37(9): 1482-5(1991), U.S Pat. No. 5,556,751), strand displacement amplification (SDA) (See G T Walker et al., Nucleic Acids Res. 20(7):16911696(1992), EP 497272), nucleic acid sequence-based amplification (NASBA) (See Compton, J. Nature 350(6313):912(1991)), transcription-mediated amplification (TMA) (See Hofmann WP et al., J Clin Virol. 32(4):289-93(2005); U.S Pat. No. 5,888,779), and rolling circle amplification (RCA) (See Hutchison C.A. et al., Proc. Natl Acad. Sci. USA. 102:1733217336(2005)).

A thermal cycler, which is a nucleic acid amplification device included in the sample analysis device of the present disclosure, is usefully used in a polymerase chain reaction (PCR)-based nucleic acid amplification reaction. Various nucleic acid amplification methods based on polymerase chain reaction (PCR) are known. For example, the methods may include quantitative PCR (quantitative PCR), digital PCR, asymmetric PCR, reverse transcription PCR (RT-PCR), Differential Display PCR (DDPCR), nested PCR, optional priming PCR (AP-PCR), multiplex PCR, SNP genome typing PCR, etc.

For example, a thermal cycler which is the nucleic acid amplification device of the present disclosure, may perform a denaturing step, an annealing step, and an extension (or amplification) step in order to amplify deoxyribonucleic acid (DNA) having a specific nucleotide sequence.

The denaturation step is a step of separating the double-stranded DNA into single-stranded DNA by heating a solution containing a reagent and a sample containing the double-stranded DNA which is a template nucleic acid to a specific temperature, for example, about 95°C. The annealing step is a step of providing an oligonucleotide primer having a nucleotide sequence complementary to a nucleotide sequence of a nucleic acid to be amplified; cooling the isolated single-stranded DNA to a specific temperature, for example, 60°C.; and binding the primer to a specific nucleotide sequence of the single-stranded DNA to form a partial DNA-primer complex. The extension step carries out a step of maintaining the solution at a specific temperature, for example 72°C., after the annealing step to form double-stranded DNA based on the primers of the partial DNA-primer complex by DNA polymerase.

In an embodiment, the sample analysis device of the present disclosure may exponentially amplify the DNA having the specific nucleotide sequence by repeating the above-described three steps, for example, 10 to 50 times.

In another embodiment, the sample analysis device of the present disclosure may simultaneously perform the annealing step and the extension step. In this case, the sample analysis device may complete the first circulation by performing two steps consisting of a denaturation step and an annealing/extension step.

Meanwhile, a nucleic acid detecting device included in the sample analysis device of the present disclosure is a device for detecting a target nucleic acid in a sample on which polymerase chain reaction (PCR) is performed through a nucleic acid amplification device, and includes an optical module for detecting emission light emitted from a fluorescent material in the target nucleic acid.

The optical module is an optics mechanism that analyzes (or monitors) in real time the amplification reactions performed in the nucleic acid amplification device. As an embodiment, the optical module may include a plurality of components such as a light source, an optical filter, a convex lens, a beam splitter, and a photodetector, and may detect fluorescence generated in a nucleic acid amplification reaction performed in the optical module in real time.

According to an embodiment of the present disclosure, the sample analysis device is a real-time detection device. According to an embodiment of the present disclosure, the sample analysis device is a real-time nucleic acid detection device. According to an embodiment of the present disclosure, the sample analysis device is a real-time PCR device.

In an embodiment of the present disclosure, the sample analysis device is provided in the sample analysis unit.

The molecular diagnostic system of the present disclosure also includes a transport device. The transport device transports the reaction vessel.

As used herein, the term "reaction vessel" refers to a space for accommodating a material used in a sample preparation device and a sample analysis device. The material generally includes a solution. The reaction vessel may be used as a "sample vessel" or "analytical sample vessel" or "vessel" containing the analysis sample. In addition, in the present specification, a space accommodating a material used in the preparation device and the analysis device may be used as "container" or "carrier". "Vessel", "container", and "carrier" are not specifically distinguished. However, it may be selectively used depending on the device, shape, or internal receiving material used.

Also, the reaction vessel refers to a vessel used for nucleic acid extraction, amplification reaction solution composition, and amplification reaction setup (for example, PCR setup) performed in a sample preparation device. That is, a specimen, at least one extraction reagent, at least one composition for the reaction solution, and a master mix including the extracted nucleic acid and the reaction solution, and the like may be accommodated in the container respectively, and the analysis sample of which the reaction is to be performed through the sample analysis device may be dispensed into the reaction vessel and accommodated therein. In an embodiment of the disclosure, the reaction vessel includes a tube, a tube strip and the like. In another embodiment of the disclosure, the container may include a cartridge and a well plate. The reaction vessel may have various sizes according to the materials to be accommodated therein, and various means for storing or containing the reaction vessel may be prepared depending on the reaction vessel of various sizes. The means for containing the reaction vessel may include a carrier, a rack, an adapter, and the like, and one or more containers may be inserted and stored in each means for containing the reaction vessel.

In an embodiment of the disclosure, the reaction vessel may include a cap. In another embodiment of the present disclosure, the reaction vessel may be sealed using a film or the like.

As used herein, the term "analysis reaction vessel" is a sample vessel that can be received in a sample holder of an analysis device. The analysis reaction vessel may contain a predetermined volume of an analysis sample containing a target nucleic acid or a predetermined volume of an analysis sample not containing a target nucleic acid, and be contained in a sample holder to be used for reaction (e.g., amplification) or detection (e.g., fluorescence signal). An analysis sample vessel refers to a reaction vessel used in a sample holder of an analytical device among the reaction vessels, and all analysis sample vessels are included in the reaction vessel.

The analysis sample vessel described in the present specification describes a tube capable of accommodating an analysis sample as an example, but analysis sample vessels of various materials and shapes may be used according to the shape of the reaction region. The analysis sample vessel is inserted into a well formed in the reaction region so that a reaction cycle of heating and cooling can be performed. That is, the "analysis sample vessel" refers to a closed space in which the reaction is performed.

The term 'analysis sample vessel' may be understood to include one or two or more sample holding space. A sample holding space of analysis sample vessel refers to a unit capable of receiving an analysis sample (e.g., an analyte or reaction mixture). Each of the test tube, amplification tube, strip tube, well plate, multi well PCR plate is an embodiment of an analysis sample vessel comprising one or more sample holding space.

In an embodiment of the disclosure, one or more analysis sample vessel may be mounted on the sample holder.

In another embodiment of the present disclosure, one or more analysis sample vessels are placed in a multi-well plate (hereinafter referred to as a "well plate"). A well plate containing one or more analysis sample vessels may be mounted on the sample holder.

In another embodiment of the present disclosure, the analysis sample vessel is a well plate capable of receiving the analysis sample in one or more wells. A well plate that received the analysis sample in one or more wells may be mounted on the sample holder.

The embodiments of the analysis sample vessel describe some embodiments among preferred embodiments to be implemented in the present disclosure. Therefore, it is obvious that the analysis sample vessel of the present disclosure may be variously implemented according to other embodiments.

The term "reaction mixture" used herein may refer to a solution mixed with an analyte to facilitate detection of the analyte. The reaction mixture may include one or more reaction reagents for amplification.

The transport device of the present disclosure is a device for transporting a reaction vessel used in a molecular diagnostic system from a sample preparation unit to a sample analysis unit, and transporting and mounting the reaction vessel to each component in the sample analysis unit.

In an embodiment of the present disclosure, the transport device comprises a lift module to move the reaction vessel from the sample preparation unit to the sample analysis unit, and a crane module to transport and mount the reaction vessel moved to the sample analysis unit to other components in the sample analysis unit.

The transport device may be operated in up/down, front/rear, left/right directions, but in an embodiment of the present disclosure, the lift module may be operated in up/down and left/right directions, and the crane module may be operated in up/down, front/rear, left/right directions.

The transport device transports a reaction vessel and the like between the sample preparation unit and the sample analysis unit. To this end, the sample analysis unit includes a first local opening, and the sample preparation unit includes a second local opening.

The first local opening is located locally in the sample analysis unit. The second local opening is located locally in the sample preparation unit. Being located locally means being located only in a part of the whole.

The molecular diagnostic system of the present disclosure is configured to locally form a local opening in a sample analysis unit and a sample preparation unit, and configured to transport a reaction vessel or the like between the sample analysis unit and the sample preparation unit only through the local opening while performing a method of processing and analyzing a sample in the molecular diagnostic system of the present disclosure.

Accordingly, the sample analysis unit and the sample preparation unit may maximize the rate of closure to the outside. Also, the exchange of unintended material and energy involved in the transfer of intended material, such as a reaction vessel, between the sample analysis unit and the sample preparation unit can be minimized.

According to an embodiment of the present disclosure, the sample preparation unit, sample analysis unit, and transport device are enclosed.

Enclosing means preventing the exchange of material or energy with the outside. The material or energy may be gas, sound, heat, or light. In addition, the material may be a reaction vessel, a sample, or a reagent which is introduced or discharged while a molecular diagnostic system operates.

The enclosing of the present disclosure comprises not only a sealed enclosing which completely prevents the exchange of materials or energy with the outside, but also a substantially enclosing which enables the exchange of materials or energy with the outside to be performed in a controlled state.

The enclosing may be implemented by providing a housing. For example, the enclosed sample preparation unit may include a housing, and devices included in the sample preparation unit may be located in the housing of the sample preparation unit. Alternatively, that the sample preparation unit is enclosed may mean that devices included in the sample preparation unit form their own housings. For the substantial enclosing, the housing may be provided with a material movement passage such as an opening. For the substantial enclosing, the housing may be provided with a device for exchanging air and heat, such as a fan, a slit, and a heat exchanger.

According to an embodiment of the present disclosure, the sample preparation unit may include a housing of sample preparation unit. According to an embodiment of the present disclosure, the sample analysis unit may include a housing of sample analysis unit. According to an embodiment of the present disclosure, the transport device may be located in the housing of the sample preparation unit and/or the sample analysis unit.

The passthrough cavity is a configuration for connecting the sample preparation unit and the sample analysis unit that are environmentally/spatially separated. The passthrough cavity is a passage that spatially connects the sample preparation unit and the sample analysis unit that are adjacent to each other to allow the reaction vessel prepared in the sample preparation unit to move to the sample analysis unit.

In an embodiment of the present disclosure, the passthrough cavity may include a first local opening included in the sample analysis unit and a second local opening included in the sample preparation unit.

According to an embodiment of the present disclosure, the first local opening is a gate-type opening. The gate-type opening is not always open, but is selectively opened when necessary. The necessary time point may be in the transport step of step (b) of the present disclosure method to be explained later. For example, the first local opening of the sample analysis unit may be opened during the transport step and closed during the sample preparation step and the sample analysis step. The gate-type opening includes a door device.

According to an embodiment of the present disclosure, the second local opening of the sample preparation unit may be a gate-type or non-gate-type opening. Specifically, the second local opening of the sample preparation unit may be a non-gate type opening and may be located on a lower surface of the sample preparation unit.

According to an embodiment of the present disclosure, the first local opening is located on the top surface or the side surface of the sample analysis unit, and the second local opening is located on the bottom surface or the side surface of the sample preparation unit. As a result, the first local opening and the second local opening may be arranged to be adjacent to each other, and the exposure of the reaction vessel to the outside can be minimized when the reaction vessel is transferred by the transfer module. According to an embodiment of the present disclosure, a connection member connecting the first local opening and the second local opening may be located between the first local opening and the second local opening.

According to an embodiment, the second local opening may be formed under the sample preparation unit. The second local opening may be located in the lower portion to provide the reaction vessel to the sample analysis unit.

The first local opening may be formed in the upper surface of the sample analysis part so as to receive the reaction vessel moved through the second local opening of the sample preparation unit.

When the first local opening is located on the upper surface of the sample analysis unit and the second local opening is located on the lower surface, the first local opening and the second local opening may be located to be adjacent to each other and face each other. The gate-type second local opening closes the sample preparation unit from the outside to minimize the exchange of unnecessary materials and energy.

According to an embodiment of the present disclosure, the sample preparation unit may include a deck. A liquid handling device of a sample preparation unit and the reaction vessel may be located on the deck. A reagent container and a sample container may also be located in the deck. The deck may be a bottom surface of the housing of the liquid handling device. In order for the liquid handling device to perform a process of preparing an analysis sample, which includes extracting nucleic acid from a sample, preparing a reaction solution for amplification, and preparing an analysis sample in which the nucleic acid is mixed with the reaction solution, a reaction vessel, a reagent container, and/or a sample container should be located at a predetermined position. The deck may be provided with a space in which a reaction vessel, a reagent container, and/or a sample container may be located. According to an embodiment of the present disclosure, the second local opening may be formed on the deck. The second local opening formed on the deck may be located at the lower portion to provide the reaction vessel to the sample analysis unit.

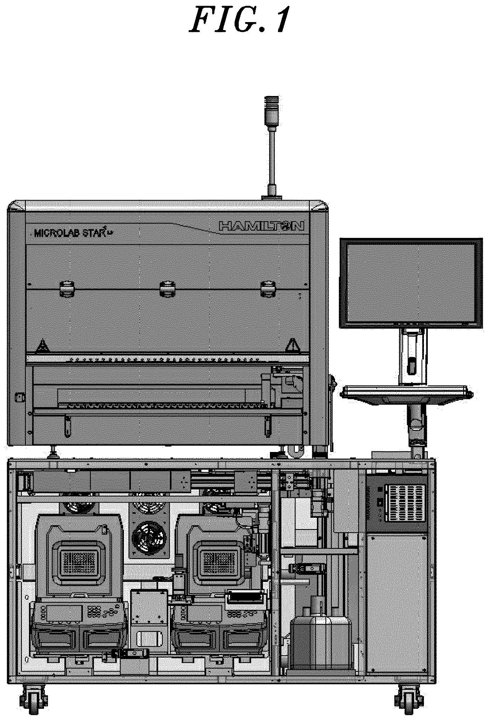

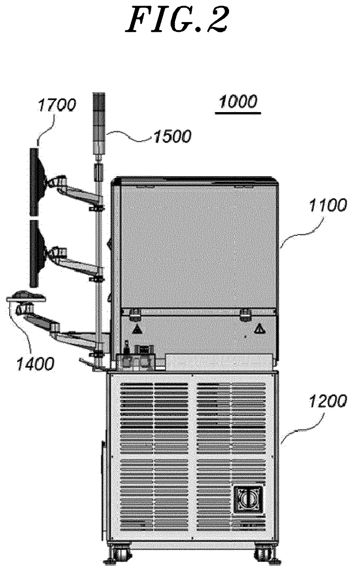

FIG. 1 is a front view illustrating a molecular diagnostic system according to the present disclosure, and FIG. 2 is a right-side view illustrating a molecular diagnostic system according to the present disclosure. As shown in FIGS. 1 and 2, in an embodiment of the present disclosure, a molecular diagnostic system 1000 includes a sample preparation unit 1100 and a sample analysis unit 1300.

In an embodiment of the present disclosure, the sample analysis unit 1200 may be configured to be located under the sample preparation unit 1100.

In another embodiment of the present disclosure, the sample preparation unit 1100 may be configured to be located on the side of the sample analysis unit 1200.

In another embodiment of the present disclosure, the sample preparation unit 1100 may be configured to be located on the rear surface of the sample analysis unit 1200.

In another embodiment of the present disclosure, the sample preparation unit 1100 may be configured to be located on the front surface of the sample analysis unit 1200.

In an embodiment of the present disclosure, the sample preparation unit 1100 may be configured to be located on top of the sample analysis unit 1200.

The sample preparation unit 1100 may include a sample preparation device. The sample preparation device according to the present disclosure is a liquid handling device. The sample analysis unit 1200 may include components for analyzing an analysis sample, such as a sample analysis device, a sealer, a liquid waste collection bin, a first analysis sample vessel retrieval container, etc. The transport device 1300 may be located inside the sample preparation unit.

The sample analysis unit 1200 may include a housing in the form of a cabinet, a locker, a box/case, etc.

The sample analysis unit 1200 may be configured as a table in which front, rear, left, right, and lower portions are closed and at least one door is provided.

The sample analysis unit 1200 may be formed in the form of a cabinet including at least one door.

The molecular diagnostic system 1000 additionally includes one or more monitor 1700 capable of monitoring an operational state of the molecular diagnostic system. The molecular diagnostic system 1000 includes an input device 1400 that may receive a command from a user on an upper surface of the sample analysis unit 1200.

In an embodiment of the present disclosure, the molecular diagnostic system 1000 includes a monitor 1700 for monitoring an operational state and an input device 1400 for inputting commands.

In another embodiment of the present disclosure, the molecular diagnostic system 1000 may include a touch screen monitor (not shown) capable of monitoring an operating state and touch-inputting a command.

In another embodiment of the present disclosure, the molecular diagnostic system 1000 may optionally include at least one of the monitor 1700 and/or the input device 1400 as needed. In this case, the monitor 1700 or the input device 1400 may be remotely located, and may be connected through at least one communication network of wired and wireless communication networks to be remotely used by the user.

A signal light tower 1500 included in the molecular diagnostic system 1000 is a warning lamp for visually indicating an operation state of the molecular diagnostic system 1000 to a user.

In an embodiment of the present disclosure, the signal light tower 1500 may indicate a normal operation, a warning, an operation stop, and the like so that the user may identify the operation status. The signal light tower 1500 may use a color to display each operation state of the molecular diagnostic system 1000, and may be displayed in a text form as needed. Alternatively, the signal light tower 1500 may be displayed using both a color and a text.

The molecular diagnostic system 1000 may further include a speaker capable of outputting at least one of a voice or sound capable of representing an operation state.

The sample analysis unit 1200 may include components for sample analysis therein. The sample analysis unit 1200 has at least one door installed for maintenance of components. The door is installed on the front/rear, left/right, etc. so that the user may access each component.

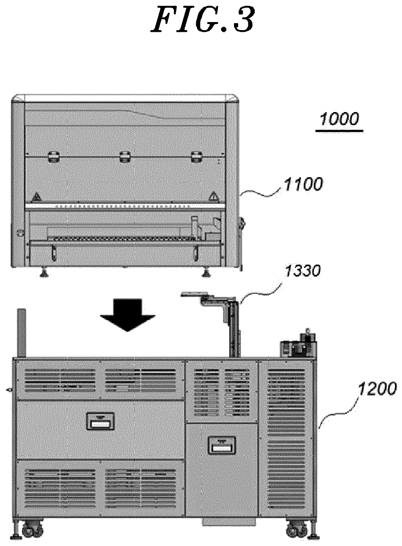

FIG. 3 is an exemplary view illustrating an operational connection of a molecular diagnostic system according to an embodiment of the present disclosure. As shown in FIG. 3, the sample preparation unit 1100 is located above the sample analysis unit 1200.

The sample preparation unit 1100 includes a liquid handling device. The liquid handling device may be installed and operated alone for preparation of an analysis sample, and may be used as the molecular diagnostic system 1000 in operative connection with the sample analysis unit 1200, according to an embodiment of the present disclosure.

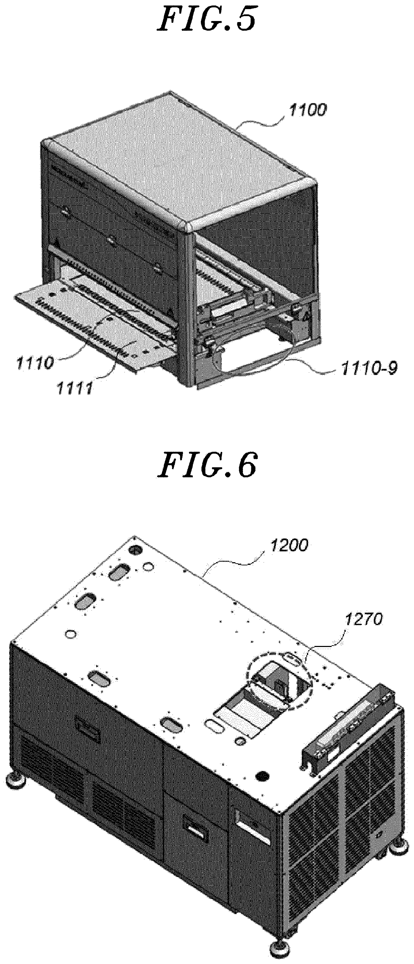

According to an embodiment of the present disclosure, when the sample preparation unit 1100 is combined with the sample analysis unit 1200 and used as the molecular diagnostic system 1000, the sample preparation unit 1100 may form the second local opening 1110-9 so that the lift module 1330 provided in the sample analysis unit 1200 may move inside (see FIG. 5). The second local opening 1110-9 is an empty space and is a defined passage through which the analysis sample vessel 1600 is moved by the lift module 1330.

When the lift module 1330 is moved into the sample preparation unit 1100, the sample preparation unit 1100 mounts an analysis sample vessel (not shown) for receiving the analysis sample or a plate (not shown) for receiving the analysis sample vessel on the lift module 1330. The lift module 1330 moves the mounted analysis sample vessel or plate to the inside of the sample analysis unit 1200.

According to an embodiment of the present disclosure, when the sample preparation unit 1100 is positioned on the sample analysis unit 1200, the sample preparation unit 1100 and the sample analysis unit 1200 may be coupled to each other through a coupling mechanism (not shown).

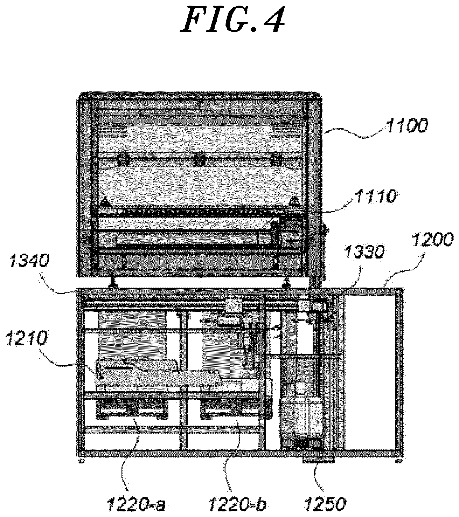

FIG. 4 is an internal front view illustrating a molecular diagnostic system of the present disclosure. As shown in FIG. 4, the sample analysis unit 1200 is located under the sample preparation unit 1100.

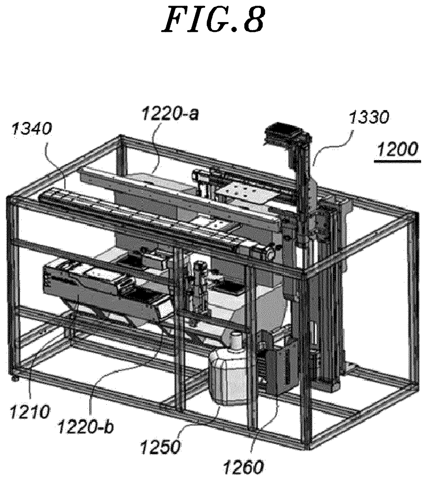

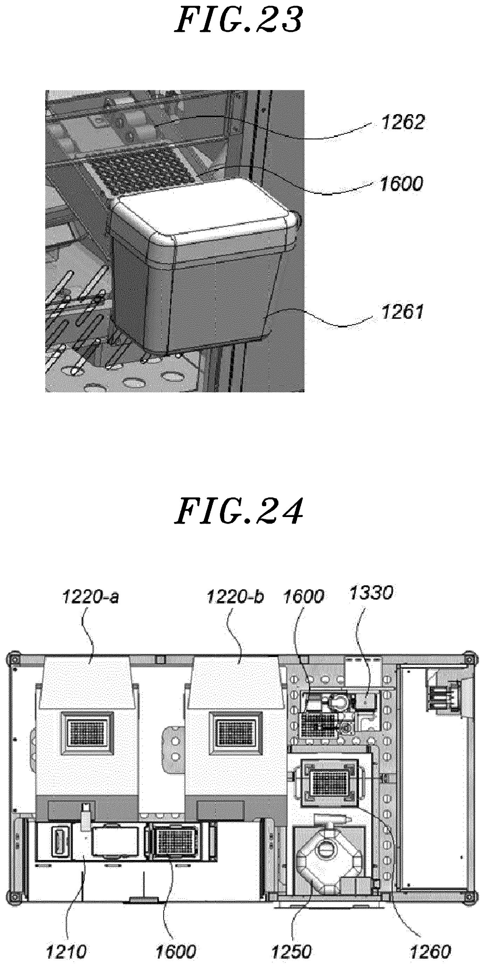

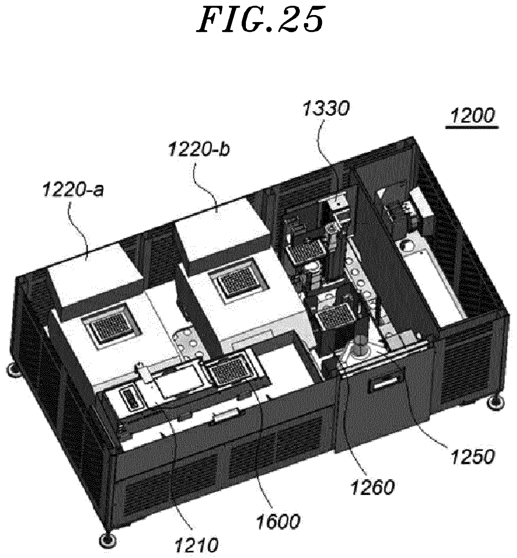

The sample analysis unit 1200 will be described with reference to FIGS. 8, 24, and 25. FIG. 8 is an internal perspective view illustrating a sample analysis unit of the molecular diagnostic system according to an embodiment of the present disclosure. FIG. 24 is a plan view illustrating a position where an analysis sample vessel is moved by a crane module in the sample analysis unit according to an embodiment of the present disclosure. FIG. 25 is a perspective view illustrating a position at which an analysis sample vessel is moved by a crane module in the sample analysis unit according to an embodiment of the present disclosure.

In the embodiment of the present disclosure, the sample analysis unit 1200 includes a lift module 1330 for receiving the analysis sample vessel 1600 prepared in the sample preparing unit 1100.

The sample analysis unit 1200 includes a crane module 1340 for moving the analysis sample vessel 1600 received by the lift module 1330 to each component in the sample analysis unit 1200.

The lift module 1330 and the crane module 1340 included in the sample analysis unit 1200 are the transport device 1300. The transport device 1300 moves the analysis sample vessel 1600 under the control of a control module (not shown) included in the molecular diagnostic system 1000.

The sample analysis unit 1200 may include a sealer 1210 for sealing an inlet of the analysis sample vessel 1600. The sealer 1210 may be an automated sealer. The sealer 1210 may be disposed in the sample analysis unit 1200. In an embodiment, the sealer may be disposed in the sample preparation unit 1100.

The sample analysis unit 1200 may be provided with at least one sample analysis device, 1220-a, 1220-b for analyzing the analysis sample received in the analysis sample vessel.

In the sample analysis unit 1200, a liquid waste collection bin 1250 for recovering various solutions used to prepare the analysis sample in the sample preparation unit 1100 may be positioned.

The sample analysis unit 1200 may including a first analysis sample vessel retrieval container (not shown) for collecting the analysis sample vessel 1600, which has been completely analyzed by the sample analysis device, 1220-a, 1220-b.

The sample analysis unit 1200 includes a control module (not shown) that controls an operation of the molecular diagnostic system 1000.

The sample analysis unit 1200 has a first local opening 1270 formed on an upper surface thereof through which the lift module 1330 moving to the sample preparation unit 1100 to receive the analysis sample vessel 1600 passes.

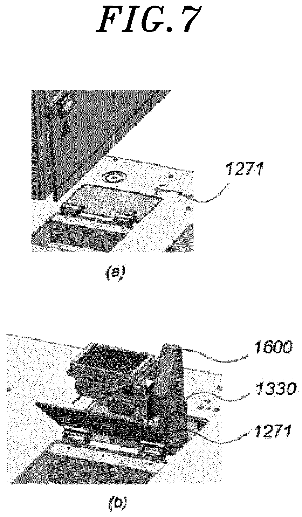

According to an embodiment of the present disclosure, the first local opening 1270 may be explained as follows with reference to FIGS. 6 and 7. FIG. 6 is a perspective view illustrating a sample analysis unit according to an embodiment of the present disclosure. FIG. 7 is a perspective view illustrating door device of a first local opening of a sample analysis unit according to an embodiment of the present disclosure. As shown in FIGS. 6 and 7, a first local opening 1270 is formed in the upper surface of the sample analysis unit 1200.

The first local opening 1270 is formed to have a size through which a vertical motion guide 1332 and an analysis sample vessel rack 1333 included in the lift module 1340 may pass.

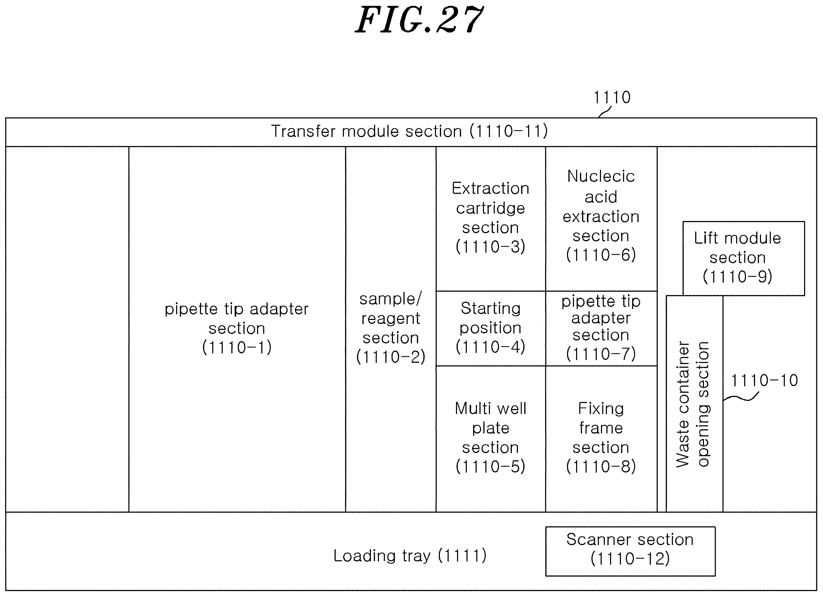

The first local opening 1270 is formed to vertically connect with the second local opening 1110-9 formed in the deck 1110 of the sample preparation unit 1100(FIG. 5 and FIG. 27).

In an embodiment of the present disclosure, the first local opening 1270 is formed on the right side of the top surface of the sample analysis unit 1200, and the second local opening 1110-9 is formed on the right side in the plane of the deck 1110.

In another embodiment of the present disclosure, the first local opening 1270 may be formed on the left side of the top surface of the sample analysis unit 1200, and the second local opening 1110-9 may be formed on the left side in the plane of the deck 1110.

In another embodiment of the present disclosure, the first local opening 1270 may be formed on the upper side of the top surface of the sample analysis unit 1200, and the second local opening 1110-9 may be formed on the upper side in the plane of the deck 1110.

In another embodiment of the present disclosure, the first local opening 1270 may be formed on the underside of the top surface of the sample analysis unit 1200, and the second local opening 1110-9 may be formed on the underside in the plane of the deck 1110.

In an embodiment of the present disclosure, the first local opening 1270 is a passage for moving a part of the lift module 1330 located inside the sample analysis unit 1200 into the sample preparation unit 1100. (See FIG. 6)
In another embodiment of the present disclosure, the first local opening 1270 is an opened passage for moving a part of the lift module 1330 inside the sample analysis unit 1200 into the sample preparation unit 1100. The first local opening 1270 is a gate-type opening and when the part of the lift module 1330 does not move into the sample preparation unit 1100, the first local opening 1270 opened through the open/close module 1271 provided in the first local opening 1270 may be closed. (See FIG. 7)

The open/close module 1271 is provided to block contaminants outside the sample analysis unit 1200.

In an embodiment of the present disclosure, the open/close module 1271 may be implemented in a hinge manner to be opened/closed to an upper side or a lower side of the upper surface of the sample analysis unit 1200.

In another embodiment of the present disclosure, the open/close module 1271 may be implemented in a sliding manner to be opened/closed in a manner of being moved on the upper surface of the sample analysis unit 1200.

In another embodiment of the present disclosure, the open/close module 1271 may be any type in which the first local opening 1270 may be opened and closed by a method other than the hinge method or the sliding method.

As shown in FIG. 7(a), when the lift module 1330 is located inside the sample analysis unit 1200, the open/close module 1271 of the first local opening 1270 is closed.

As shown in FIG. 7(b), when the lift module 1330 moves to the sample preparation unit 1100, the open/close module 1271 of the first local opening 1270 is opened. The open/close module 1271 of the first local opening 1270 is closed after the lift module 1330 moves into the sample analysis unit 1200.

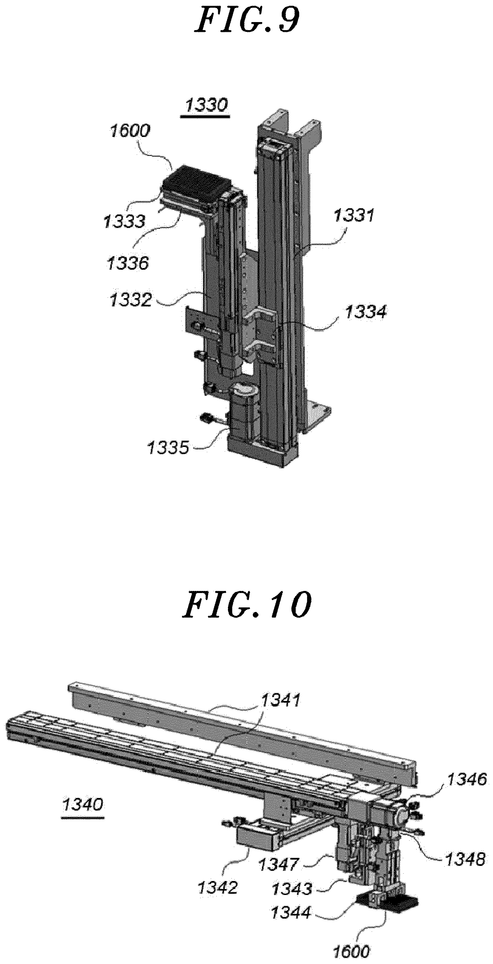

According to an embodiment of the present disclosure, the lift module 1330 may be explained as follows with reference to FIG. 9. FIG. 9 is a perspective view illustrating a lift module of the sample analysis unit according to an embodiment of the present disclosure.

The lift module 1330 is a component capable of receiving the analysis sample vessel 1600 in the sample preparation unit 1100. The lift module 1330 provides an elevator operation form that can be elevated to the sample preparation unit 1100 above the sample analysis unit 1200 to receive an analysis sample from the sample preparation unit 1100.

The lift module 1330 includes a vertical fixed guide 1331 in the form of a pillar fixed inside the sample analysis unit 1200. The vertical fixed guide 1331 includes a guide connector 1334 that moves up/down. The lift module 1330 includes a vertical motion guide 1332 coupled to the guide connector 1334 of the vertical fixed guide 1331.

The vertical motion guide 1332 includes a motion guide connector 1414 that is moved up/down. The vertical motion guide 1332 includes a rack guide 1336 that moves up/down.

The lift module 1330 includes an analysis sample vessel rack 1333 receiving an analysis sample vessel above the rack guide 1336.

The lift module 1330 includes an actuator 1335 configured to provide power for moving the vertical motion guide 1332 upward/downward.

The vertical fixed guide 1331 is coupled and fixed to at least one of the upper portion, the lower portion, and/or the side surface of the inside of the sample analysis unit 1200. The vertical fixed guide 1331 is coupled to the guide connector 1334. The vertical fixed guide 1331 may move the coupled guide connector 1334 to the up/down direction.

The vertical fixed guide 1331 may use power provided from the actuator 1335 to move the guide connector 1334 upward/downward.

The size of the vertical fixed guide 1331 is equal to or smaller than the inner height of the sample analysis unit 1200. As the vertical fixed guide 1331 moves the guide connector 1334 upward, the vertical motion guide 1332 coupled to the guide connector 1334 may be moved to the sample preparation unit 1100 via the second defined passage 1310.

The guide connector 1334 couples the vertical fixed guide 1331 and the vertical motion guide 1332. The guide connector 1334 moves the vertical motion guide 1332 depending on the up/down movement provided by the vertical fixed guide 1331.

The vertical motion guide 1332 may be moved in the vertical direction according to the driving of the vertical fixed guide 1331.

In an embodiment of the disclosure, the vertical motion guide 1332 is fixedly coupled to the rack guide 1336.

A rack guide 1336 is coupled to an upper portion of the vertical motion guide 1332, and when the vertical fixed guide 1331 moves the vertical motion guide 1332 upward, the rack guide 1335 is moved to inside of the sample preparation unit 1100.

In another embodiment of the disclosure, the vertical motion guide 1332 is coupled to a rack guide 1336 that is movable in the up/down direction.

The vertical fixed guide 1331 may move the rack guide 1336 upward/downward. The rack guide 1336 is moved to the sample preparation unit 1100 or the sample analysis unit 1200 by the movement of the vertical fixed guide 1331 and the vertical motion guide 1332.

The vertical motion guide 1332 uses power provided from the actuator 1335 or a separate actuator (not shown) to move the rack guide 1336 in the up/down direction.

The rack guide 1336 may be coupled to the vertical motion guide 1332 and the analysis sample vessel rack 1333 capable of holding the analysis sample vessel 1600 may be positioned at upper portion of the rack guide 1336.

The analysis sample vessel rack 1333 is a space in the sample preparation unit 1100 where the analysis sample vessel containing the analysis sample is located. The analysis sample vessel rack 1333 may be referred to as a pedestal, a cradle, a holder, or the like.

The analysis sample vessel rack 1333 may be moved into the sample preparation unit 1100 by movement of the vertical motion guide 1332 together with the rack guide 1336, and may receive the analysis sample vessel 1600.

The rack guide 1336 performs an extension movement in the horizontal direction of the analysis sample vessel rack 1333 connected to the upper portion of the rack guide 1336.

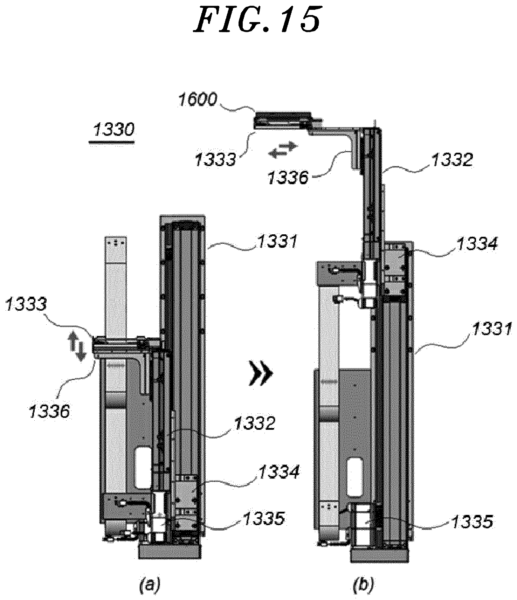

The extended movement of the analysis sample vessel rack 1333 may be explained with reference to FIGS. 15 to 18.

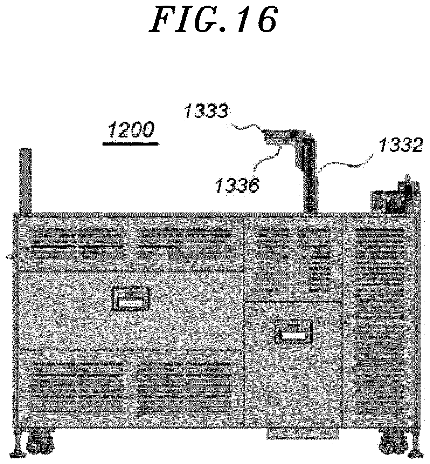

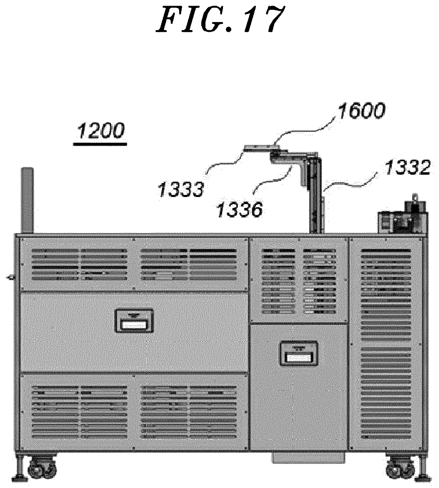

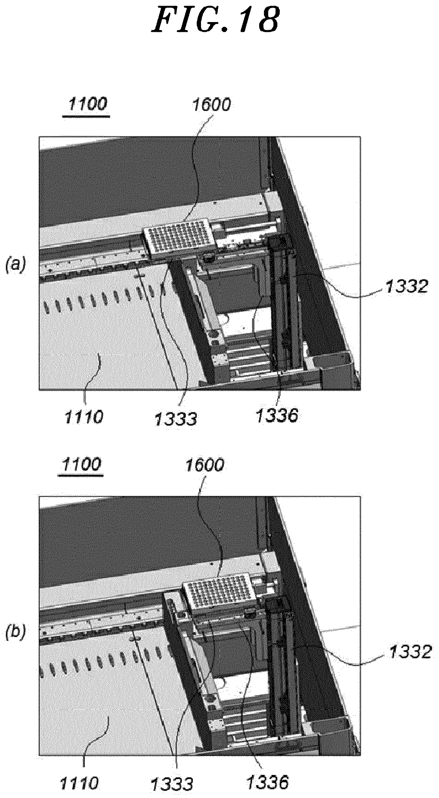

FIG. 15 is an exemplary view illustrating the operation of the lift module according to an embodiment of the present disclosure. FIG. 16 is a first exemplary view illustrating the horizontal extension movement operation of the lift module in the sample analysis unit according to an embodiment of the present disclosure. FIG. 17 is a second exemplary view illustrating the horizontal extension movement operation of the lift module in the sample analysis unit according to an embodiment of the present disclosure. FIG. 18 is a perspective view illustrating the horizontal extension movement of the lift module in the sample analysis unit according to an embodiment of the present disclosure.

As shown in FIGS. 15 to 18, the vertical fixed guide 1331 of the lift module 1330 moves the guide connector 1334 in the vertical direction using the power provided from the actuator 1335, and a part of the guide connector 1334 is coupled to the vertical fixed guide 1331 and the other part is coupled to the vertical motion guide 1332.

The vertical motion guide 1332 may move inside the sample preparation unit 1100 as the coupled guide connector 1334 moves upward. At this time, the rack guide 1336 connected to the upper portion of the vertical motion guide 1332 is also moved to the inside of the sample preparation unit 1100. (see FIG. 16)
When the rack guide 1336 is moved to the inside of the sample preparation unit 1100, the rack guide 1336 may perform horizontal extension movement on the analysis sample vessel rack 1333 located at the upper portion by a predetermined distance (see FIG. 15(b), FIG. 17 and FIG. 18(a)).

The transport module (not shown) provided in the liquid handling device of the sample preparation unit 1100 picks up and transports the prepared analysis sample vessel 1600 and places the analysis sample vessel on the horizontally extended-moved analysis sample vessel rack 1333, thereby allowing the analysis sample vessel 1600 to be moved to the sample analysis unit 1200.

When the analysis sample vessel 1600 is mounted on the analysis sample vessel rack 1333, the rack guide 1336 horizontally moves the analysis sample vessel rack 1333, which has been horizontally extended-moved, back to its original position (see FIG. 18(b)).

The vertical fixed guide 1331 moves the coupled guide connector 1334 downward when the analysis sample vessel 1600 is ready to be moved to the sample analysis unit 1200. The analysis sample vessel 1600 is moved into the sample analysis unit 1200.

The analysis sample vessel rack 1333 includes an engagement guide (not shown) corresponding to the analysis sample vessel 1600 mounted thereon. The engagement guide prevents the analysis sample vessel 1600 from being separated from the analysis sample vessel rack 1333 while moving.

In an embodiment of the disclosure, the actuator 1335 may provide power for horizontal movement of the analysis sample vessel rack 1333.

In another embodiment of the disclosure, the rack guide 1336 may be powered by another actuator for horizontal movement of the analysis sample vessel rack 1333.

The actuator 1335 may provide power for moving the lift module 1330 in the sample analysis unit 1200.

In an embodiment of the present disclosure, the actuator 1335 may use a hydraulic motor.

In another embodiment of the present disclosure, the actuator 1335 may use an electric motor.

In another embodiment of the present disclosure, the actuator 1335 may be used a hydraulic motor and an electric motor together.

In another embodiment of the present disclosure, the actuator 1335 may use a device capable of generating power except for the hydraulic motor and the electric motor.

In another embodiment of the present disclosure, the actuator 1335 may use a hydraulic motor, an electric motor and a device capable of generating power.

One or more actuators 1335 may be provided, and may provide power to at least one of the lift module 1330, the crane module 1340, and/or the analysis sample vessel rack 1333 in the sample analysis unit 1200.

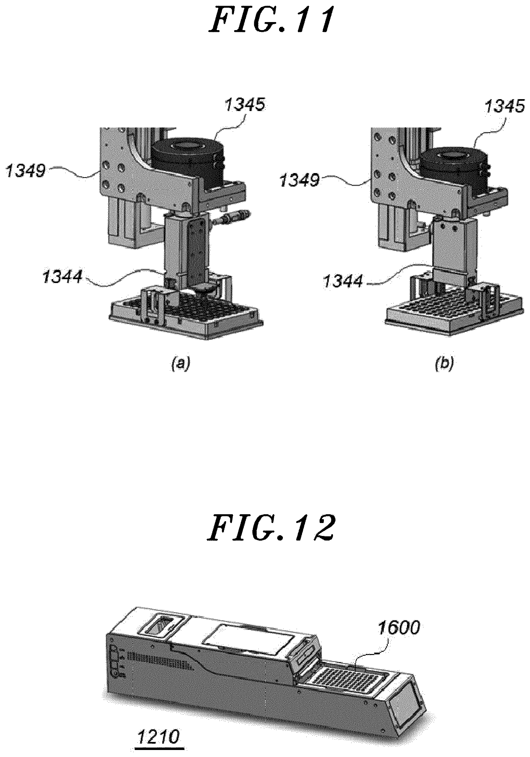

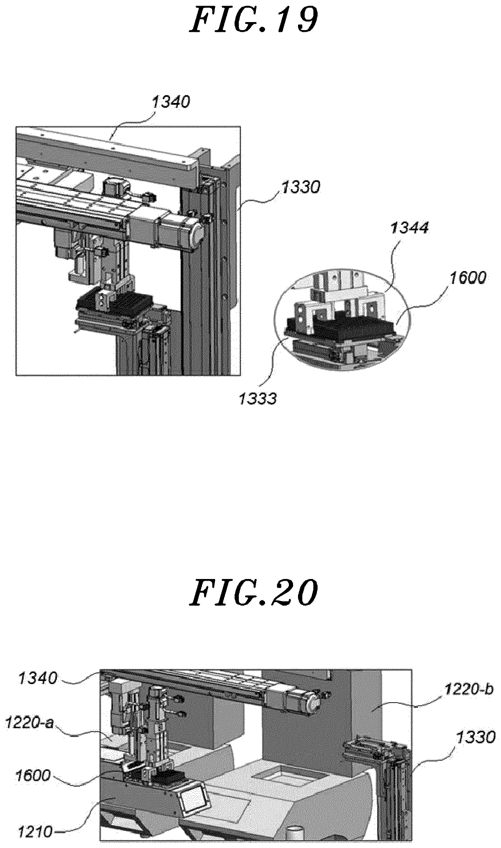

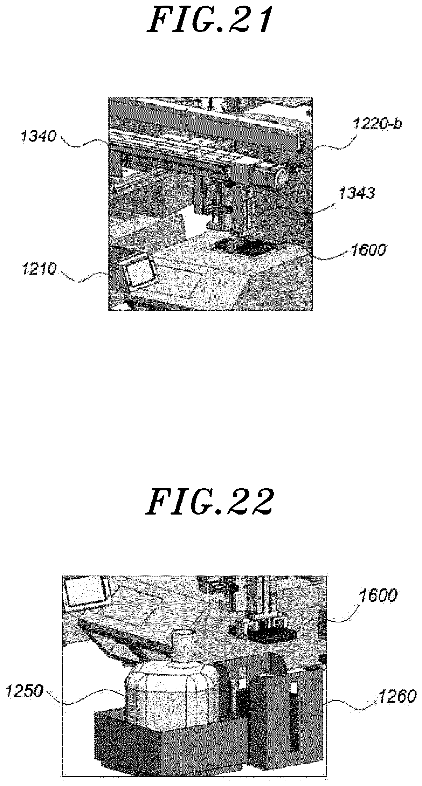

According to an embodiment of the present disclosure, the crane module 1340 may be explained as follows with reference to FIGS. 10, 11, and 19 to 21. FIG. 10 is a perspective view illustrating the crane module of the sample analysis unit according to an embodiment of the present disclosure. FIG. 11 is a perspective view illustrating a rotation component of a crane module according to another embodiment of the present disclosure. FIG. 19 is an exemplary view illustrating that the crane module according to an embodiment of the present disclosure transports the analysis sample vessel from the lift module. FIG. 20 is an exemplary view illustrating that a crane module according to an embodiment of the present disclosure mounts an analysis sample vessel to an automated sealer. FIG. 21 is an exemplary view illustrating that a crane module according to an embodiment of the present disclosure mounts an analysis sample vessel to a sample analysis device. FIG. 22 is an exemplary view illustrating that the crane module according to an embodiment of the present disclosure loads an analysis sample vessel into an analysis sample vessel retrieval container.

As shown in FIGS. 10 and 19, the crane module 1340 performs an operation for moving the analysis sample vessel 1600 received by the lift module 1330 from the sample preparation unit 1100 to each component of the sample analysis unit 1200.

In an embodiment of the present disclosure, the crane module 1340 includes a horizontal fixed guide 1341, a horizontal motion guide 1342, a gripper lift 1343, and a gripper 1344 at an upper portion within the sample analysis unit 1200, and the gripper 1344 may move in the X, Y, Z axes by the respective guides 1341, 1342 and the gripper lift 1343.

In another embodiment of the present disclosure, the crane module 1340 includes a horizontal fixed guide 1341, a horizontal motion guide 1342, a gripper lift 1343, a gripper rotation module 1345, and a gripper 1344 at an upper portion within the sample analysis unit 1200, and the gripper 1344 may move in X, Y, and Z axis directions and rotate by the respective guides 1341, 1342 and the gripper rotation module 1345.

The horizontal fixed guide 1341 is coupled to the horizontal motion guide 1342.

The horizontal fixed guide 1341 may be provided in the form of one or more movable rails. The horizontal motion guide 1342 is coupled to the rail-shaped horizontal fixed guide 1341 and moves in the X-axis direction.

The horizontal fixed guide 1341 may be provided in the form of two rails to stably couple with and move the horizontal motion guide 1342, and the horizontal motion guide 1342 may be connected to the two rails to be moved in the X-axis direction. One of the two rails of the horizontal fixed guide 1341 may move the connected horizontal motion guide 1342 in the X-axis direction.

In an embodiment of the present disclosure, the actuator 1336 may provide power for the horizontal fixed guide 1341 to move the horizontal motion guide 1342.

In another embodiment of the present disclosure, the power that the horizontal fixed guide 1341 moves the horizontal motion guide 1342 may be provided from an actuator (not shown) that is separately provided.

The horizontal motion guide 1342 is coupled to the gripper lift 1343.

The horizontal motion guide 1342 is provided in the form of a rail. The gripper lift 1343 is coupled to the rail-shaped horizontal motion guide 1342 to move in the Y-axis direction. The horizontal motion guide 1342 providing the rail-shaped motion may move the coupled gripper lift 1343 in the Y-axis direction.

In an embodiment of the present disclosure, the power that the horizontal motion guide 1342 moves the gripper lift 1343 may be provided by the actuator 1347.

In another embodiment of the present disclosure, the power that the horizontal motion guide 1342 moves the gripper lift 1343 may be provided from an actuator (not shown) that is separately provided.

The gripper lift 1343 is coupled to the gripper 1344. The gripper 1344 is coupled to the gripper lift 1343 that is moved upward/downward to be moved in the Z-axis direction. The gripper lift 1343 may move the coupled gripper 1344 in the Z-axis direction.

The gripper lift 1343 is formed by combining two modules.

One is a fixed module coupled to the horizontal motion guide 1342 and moved in the Y-axis. The other is a guide connector module 1349 (see FIG. 11) that is coupled to the fixed module and is moved upward/downward by the fixed module. The gripper 1344 is coupled to the guide connector module, and the gripper 1344 is moved in the Z-axis direction by the guide connector module moving in the up/down direction.

The gripper 1344 may be moved to the position of the analysis sample vessel 1600 by the operation of the gripper lift 1343 and pick up the analysis sample vessel 1600. The gripper 1344 may sense a pressure for gripping the analysis sample vessel 1600 using a pressure sensor, and thus is able to hold the analysis sample vessel 1600 without damage.

In an embodiment of the disclosure, the gripper 1344 is capable of rotating the picked-up analysis sample vessel 1600.

As shown in FIG. 11, the guide connector module 1349 of the gripper lift 1343 may be coupled with the gripper 1344 and gripper rotation module 1345. The gripper rotation module 1345 may rotate the gripper 1344 as shown in (a) to (b) of FIG. 11. The gripper rotation module 1345 is made of a rotary motor.

In an embodiment of the disclosure, the gripper rotation module 1345 may rotate the gripper 1344 at a rotation angle of 90 degrees.

In another embodiment of the present disclosure, the gripper rotation module 1345 may rotate the gripper 1344 at every rotation angle.

The actuators 1345, 1347, 1348 used in the lift module 1330 and/or the crane module 1340 may be operated using various driving forces.

In an embodiment of the present disclosure, at least one or more of the actuators 1345, 1347, 1348 may use a hydraulic motor.

In another embodiment of the present disclosure, at least one of the actuators 1345, 1347, 1348 may use an electric motor.

In another embodiment of the present disclosure, at least one or more of the actuators 1345, 1347, 1348 may use a hydraulic motor and an electric motor together.

In another embodiment of the present disclosure, at least one of the actuators 1345, 1347, 1348 may use a device capable of generating power except for the hydraulic motor and the electric motor.

In another embodiment of the present disclosure, at least one of the actuators 1345, 1347, 1348 may use a hydraulic motor, an electric motor, and a device capable of generating power.

As shown in FIG. 19, the crane module 1340 may move the gripper 1344 to a position above the analysis sample vessel rack 1333 of the lift module 1330 to transport the analysis sample vessel 1600. The crane module 1340 may lower the gripper 1344 located above the analysis sample vessel rack 1333 and then pick up the analysis sample vessel 1600.

In an embodiment of the present disclosure, the operation of the crane module 1340 to move the gripper 1344 to the position above the analysis sample vessel rack 1333 is performed according to preset position coordinates.

The molecular diagnostic system 1000 stores all the positions where the crane module 1340 can move within the sample analysis unit 1200 as coordinate information. The crane module 1340 may move according to coordinate information of the position to be moved.

In another embodiment of the present disclosure, the operation of the crane module 1340 to move the gripper 1344 to the position above the analysis sample vessel rack 1333 may be performed according to preset position coordinates, and the operation of the crane module 1340 to stop the gripper 1344 at the exact location may be performed by a position sensor module (not shown) provided in the sample analysis unit 1200. The position sensor module allows the gripper 1344 to stop at a predetermined position by transmitting and receiving signals between the gripper 1344 and the analysis sample vessel rack 1333 based on the optical signal.

The position sensor module may be provided on the analysis sample vessel rack 1333, the automatic sealer 1210, the sample analysis devices 1220-a and 1220-b, the first analysis sample vessel retrieval container 1260, or the conveyor 1350, which are components by which the gripper 1344 moves the analysis sample vessel 1600.

The lift module 1330 and the crane module 1340 of the transport device 1300 included in the sample analysis unit 1200 receive power for moving the analysis sample vessel 1600.

The lift module 1330 receives power from the vertical fixed guide 1331, the vertical motion guide 1332, and/or the rack guide 1336.

The crane module 1340 receives power from the horizontal fixed guide 1341, the horizontal motion guide 1342, the gripper lift 1343, and/or the gripper 1344.

Each component receiving power from the lift module 1330 and the crane module 1340 may perform operations through the following driving method.

In an embodiment of the present disclosure, the lift module 1330 and/or the crane module 1340 may provide a belt type motion to move the analysis sample vessel 1600.

In another embodiment of the present disclosure, the lift module 1330 and/or the crane module 1340 may provide a chain type of motion move the analysis sample vessel 1600.

In another embodiment of the present disclosure, the lift module 1330 and/or the crane module 1340 may provide a screw-type or jack-screw-type motion to move the analysis sample vessel 1600.

In another embodiment of the present disclosure, the lift module 1330 and/or the crane module 1340 may provide a cylinder type motion to move the analysis sample vessel 1600.

In another embodiment of the present disclosure, the lift module 1330 and/or the crane module 1340 may provide a hoist type motion to move the analysis sample vessel 1600.

In another embodiment of the present disclosure, the lift module 1330 and/or the crane module 1340 may move the analysis sample vessel 1600 through a driving method other than the method described above.

As shown in FIG. 20, the crane module 1340 can move the analysis sample vessel 1600 picked up from the analysis sample vessel rack 1333 to be mounted on the automated sealer 1210. The automatic sealer 1210 is a device for automatically sealing the upper surface of the analysis sample vessel 1600.

The automatic sealer 1210 will be explained with reference to FIG. 12 as follows.

FIG. 12 is a perspective view illustrating an automated sealer which is a sealer according to an embodiment of the present disclosure. As shown in FIG. 12, an automated sealer 1210 may seal an inlet of an analysis sample vessel in which an analysis sample is accommodated, and may be implemented by the following embodiment.

In an embodiment of the present disclosure, the analysis sample vessel 1600 is a multi-well plate with a plurality of well with closed bottoms, and an analysis samples are received in each of well of the multi-well plates.

The automatic sealer 1210 may seal an upper surface of the analysis sample vessel 1600, which is a multi-well plate, to prevent mixing of the analysis samples and contamination from the outside.

In another embodiment of the present disclosure, the analysis sample vessel 1600 is a tube-shaped vessel inserted into each well of a multi-well plate. A plurality of connected or individually separated tubes may be inserted into each well of the multi-well plate.

The automatic sealer 1210 may prevent mixing of the analysis samples and contamination from the outside by sealing an upper surface of at least one analysis sample vessel 1600 inserted into each well of the multi-well plate.

The automatic sealer 1210 may heat-seal the injection port of the analysis sample vessel 1600 using a transparent film. Alternatively, an adhesive sealing may be used.

In an embodiment of the present disclosure, the automatic sealer 1210 may use Plate Sealer product of Hamilton Inc. (see https://www.hamiltoncompany.com/automated-liquid-handling/small-devices/hamilton-plate-sealer).

The automated sealer 1210 may be disposed in the sample preparation unit 1100 or the sample analysis unit 1200 in the molecular diagnostic system 1000.

The automated sealer 1210 may be disposed in various position in the sample analysis unit 1200.

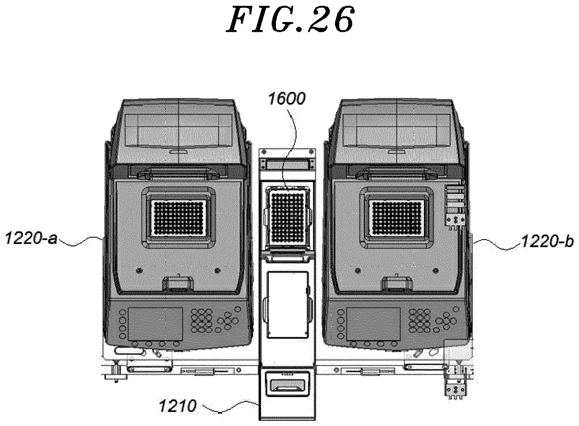

In an embodiment of the disclosure, the automated sealer 1210 may be positioned as shown in FIG. 26. FIG. 26 is a plan view illustrating the arrangement of an automated sealer in a sample analysis unit according to another embodiment of the present disclosure.

As shown in FIG. 26, the automatic sealer 1210 may be located between the first sample analysis device 1220-a and the second sample analysis device 1220-b.

When the automatic sealer 1210 is disposed between the first sample analysis device 1220-a and the second sample analysis device 1220-b, the analysis sample vessel 1600 may be horizontally rotated by 90 degrees and mounted on the automatic sealer 1210.

A 90-degree horizontal rotation of the analysis sample vessel 1600 may be performed by the gripper rotation module 1345 of FIG. 11.

The crane module 1340 horizontally rotates the analysis sample vessel 1600 by 90 degrees using the gripper rotation module 1345 to mount the analysis sample vessel 1600 to the automated sealer 1210.

In another embodiment of the disclosure, the automated sealer 1210 may be configured to be positioned in front of the sample analysis devices 1220-a, 1220-b, as shown in FIGS. 24 and 25.

When the automated sealer 1210 is disposed in front of the sample analysis devices 1220-a and 1220-b, the analysis sample vessel 1600 may be mounted to the analysis sample vessel rack 1333 of the lift module 1330, the automated sealer 1210, the sample analysis devices 1220-a and 1220-b, and the first analysis sample vessel retrieval container 1260 in the same direction.

That is, the gripper 1344 of the crane module 1340 may mount the analysis sample vessel 1600 to each component through an operation of moving without rotation.

As shown in FIG. 21, the crane module 1340 may move the analysis sample vessel 1600 sealed in the automated sealer 1210 to be mounted on any one of the plurality of sample analysis devices 1220-a, 1220-b. Sample analysis devices 1220-a, 1220-b are devices for automatically analyzing one or more analysis samples contained within an analysis sample vessel 1600.

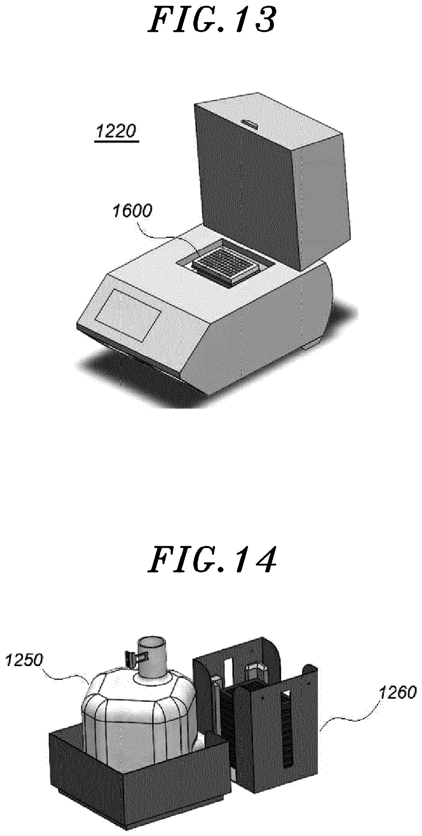

The sample analysis device 1220 according to an embodiment of the present disclosure may be described as follows with reference to FIG. 13. FIG. 13 is a perspective view illustrating a sample analysis device of a sample analysis unit according to an embodiment of the present disclosure.

As shown in FIG. 13, at least one sample analysis device 1220 for receiving the analysis sample vessel 1600 sealed by the automated sealer 1210 may be provided in the sample analysis unit 1200. That is, referring to FIG. 4, two analysis devices 1220-a and 1220-b may be provided inside the sample analysis unit 1200.

In an embodiment of the present disclosure, when two analysis devices are provided in the sample analysis unit 1200, the sample preparation unit 1100 sequentially prepares analysis samples for analysis. When the first analysis sample vessel is prepared in the sample preparation unit 1100, the first analysis sample vessel is moved so that one of the sample analysis devices in the sample analysis unit 1200 performs analysis of the first analysis sample vessel.

When the second analysis sample vessel is prepared in the sample preparation unit 1100, the second analysis sample vessel is moved so that another analysis device in the sample analysis unit 1200 performs analysis of the second analysis sample vessel.

In another embodiment of the present disclosure, when two sample analysis devices are provided in the sample analysis unit 1200, the sample preparation unit 1100 simultaneously or sequentially prepares analysis samples for analysis. When the first analysis sample vessel and the second analysis sample vessel are prepared in the sample preparation unit 1100, each analysis sample vessel is sequentially moved to the sample analysis unit 1200, and when the first analysis sample vessel is mounted on one sample analysis device 1220, the second analysis sample vessel is mounted on the other sample analysis device 1220.

The sample analysis device 1220 is provided with a sample holder (not shown) in which the analysis sample vessel 1600 is accommodated.

The sample analysis device 1220 may be provided with a cover for protecting the sample holder and an analysis sample vessel accommodated in the sample holder. When the crane module 1340 mounts the analysis sample vessel to the sample analysis device 1220, if the cover of the sample analysis device 1220 is closed, the sample analysis device may receive a control signal for opening the cover from the system control module, and then may open the cover of the sample analysis device 1220.

In an embodiment of the present disclosure, the analysis sample vessel 1600 may be provided in the form of an amplification multi-well plate including a plurality of analysis samples to be analyzed in each of a plurality of wells. In this case, the sample holder may accommodate one amplification multi-well plate. If necessary, the well plate includes n X m wells (n and m are natural numbers of 2 or more). The well plate may have a rectangular shape in which n X m wells are arranged in rows and columns. For example, 16 wells of 4 by 4 are shown. A well plate having n X m wells may be mounted in the sample holder 4100.

Various examples of well plates are as follows.

The well plate may include 4 wells of 2 X 2, 9 wells of 3 X 3, 16 wells of 4 X 4, 25 wells of 5 X 5, 36 wells of 6 X 6, 49 wells of 7 X 7, or 64 wells of 8 X 8, etc. Also, the well plate may include 8 wells of 2 X 4, 18 wells of 3 X 6, 32 wells of 4 X 8, 50 wells of 5 X 10, 72 wells of 6 X 12, 98 wells of 7 X 14, or 128 wells of 8 X 16, and the like. Also, the well plate may include 12 wells of 2 X 6, 27 wells of 3 X 9, 4 X 12, 48 wells of 5 X 15, 75 wells of 6 X 18, 108 wells of 7 X 21, 147 wells of 8 X 24, or the like. Also, the well plate may include 16 wells of 2 X 8, 36 wells of 3 X 12, 64 wells of 4 X 16, 100 wells of 5 X 20, 144 wells of 6 X 24, 196 wells of 7 X 28, or 256 wells of 8 X 32, and the like. In addition, the well plate may include 96 wells of 8 X 12, 192 wells of 12 X 16, or 384 wells of 16 X 24, etc.

In another embodiment of the present disclosure, the analysis sample vessel may be provided with one or more independent analysis sample vessels. In this case, the sample holder may receive one or more of each analysis sample vessel.

In another embodiment of the present disclosure, the reaction vessel may be provided in the form of a strip tube to which two or more sample vessels are connected. In this case, the sample holder may accommodate at least one analysis sample vessel in the form of a strip tube.

As shown in FIG. 22, the crane module 1340 may move the analysis sample vessel 1600, of which the analysis is completed in any one of the plurality of sample analysis devices 1220-a and 1220-b, to the first analysis sample vessel retrieval container 1260. The first analysis sample vessel retrieval container 1260 will be explained below with reference to FIG. 14. FIG. 14 is a perspective view showing a liquid waste collection bin and an analysis sample vessel retrieval container of a sample analysis unit according to an embodiment of the present disclosure.

As shown in FIG. 14, a liquid waste collection bin 1250 and a first analysis sample vessel retrieval container 1260 are disposed in the sample analysis unit 1200.

The liquid waste collection bin 1250 is a container for collecting solutions such as various reagents remaining after being used for preparation of the analysis sample in the sample preparation unit 1100. The liquid waste collection bin 1250 is disposed inside the sample analysis unit 1200, and the sample preparing unit 1100 has an inlet through which the solution is injected. The liquid waste collection bin 1250 and the inlet are connected to each other by a guide pipe such as a pipe that can transport the solution.

The liquid waste collection bin 1250 includes a sensor for detecting one or more of the volume or weight of the waste solution contained therein. The sensor generates a signal that can generate an alarm when either the threshold capacity or the threshold weight is exceeded. The signal may be input to a control module (not shown) of the molecular diagnostic system 1000.

The first analysis sample vessel retrieval container 1260 is a container for collecting the analysis sample vessel 1600 on which analysis has been completed by the sample analysis device 1220. The first analysis sample vessel retrieval container 1260 is located inside the sample analysis unit 1200 and may accommodate the analysis sample vessel 1600 moved by the crane module 1340.

The first analysis sample vessel retrieval container 1260 includes a sensor for sensing at least one of the quantity and weight of the analysis sample vessel 1600 accommodated therein. The sensor generates a signal that can generate an alarm when either the threshold amount or the threshold weight is exceeded. The signal may be input to a control module (not shown) of the molecular diagnostic system 1000.

The liquid waste collection bin 1250 and the first analysis sample vessel retrieval container 1260 may be emptied of the solution and the analysis sample vessel accommodated therein by the user.

In an embodiment of the present disclosure, the first analysis sample vessel retrieval container 1260 is disposed inside the sample analysis unit 1200.

In another embodiment of the present disclosure, the second analysis sample vessel retrieval container 1261 is disposed outside the sample analysis unit 1200.

The second analysis sample vessel retrieval container 1261 may be described with reference to FIG. 23. FIG. 23 is an exemplary diagram illustrating that an analysis sample vessel is collected in an analysis sample vessel retrieval container according to another embodiment of the present disclosure.

The second analysis sample vessel retrieval container 1261 is disposed outside the sample analysis unit 1200. The second analysis sample vessel retrieval container 1261 is connected to the inside of the sample analysis unit 1200 by a conveyor 1262. The conveyor 1262 is installed in a passthrough cavity (not shown) that connects the inside and the outside of the sample analysis unit 1200.

The analysis sample vessel 1600 analyzed by the sample analysis device 1220 of the sample analysis unit 1200 is transported to the conveyor 1262 by the crane module 1340. When the crane module 1340 places the analysis sample vessel 1600 on the conveyor 1262, the analysis sample vessel 1600 may be moved by the conveyor 1262 and may be accommodated in the second analysis sample vessel retrieval container 1261 disposed outside the sample analysis unit 1200.

In an embodiment of the present disclosure, the conveyor 1262 forms an inclined surface having an outer portion positioned lower than an inner portion. The conveyor 1262 may be provided with a roller on the inclined surface, so that the analysis sample vessel 1600 can be discharged to the outside of the sample analysis unit 1200. The analysis sample vessel 1600 discharged to the outside may be accommodated in the second analysis sample vessel retrieval container 1261.

In another embodiment of the present disclosure, the conveyor 1262 may be driven by power. The power may rotate a belt included in the conveyor 1262 thereby discharging the analysis sample vessel 1600 placed on the conveyor 1262 to the outside of the sample analysis unit 1200. The analysis sample vessel 1600 discharged to the outside may be accommodated in the second analysis sample vessel retrieval container 1261.

The second analysis sample vessel retrieval container 1261 can empty the analysis sample vessel 1600 received therein by the user. The passthrough cavity where the inside and the outside of the sample analysis unit 1200 are connected by the conveyor 1262 may include an open/close module (not shown). The open/close module may be opened when the analysis sample vessel 1600 is moved to the second analysis sample vessel retrieval container 1261, and may be closed in other cases. The open/close module may protect the inside of the sample analysis unit 1200 from external contamination.

The sample preparation unit 1100 is a sample preparation device for preparing an analysis sample. The sample preparation unit 1100 may be explained below with reference to FIG. 5. FIG. 5 is a perspective view illustrating a sample preparation unit of a molecular diagnostic system according to an embodiment of the present disclosure.

The sample preparation unit 1100 includes a deck 1110 that can hold various kinds of instruments and containers for preparing the analysis sample. The deck 1110 is configured so that the components included in the sample preparation unit 1100 may be mounted and fixed.

In an embodiment of the present disclosure, the deck 1110 provides a guide, which allows the components of the sample preparation unit 1100 to be inserted into the interior of the sample preparation unit 1100 in a sliding manner and positioned on the deck 1110.

The guide is an embodiment of the deck 1110 and may be provided in the form of another embodiment.

In an embodiment of the disclosure, one or more components disposed on the deck 1110 may be secured during operation of the sample preparation unit 1100 by projections and/or grooves formed on the underside of each component.

The sample preparation unit 1100 may include a loading tray 1111 in a plane extending from the deck 1110. The loading tray 1111 is installed to extend from the deck 1110 so that components to be mounted in the sample preparation unit 1100 can be easily moved into the sample preparation unit 1100. The loading tray 1111 may include a guide extending or connected to the guide of the deck 1110. The components to be mounted on the sample preparation unit 1100 may be easily moved and mounted by the guide of the deck 1110 and the guide of the loading tray 1111.

In an embodiment of the present disclosure, the liquid handling device of the sample preparation unit 1100 includes a pipette module (not shown) comprising pipette arms for dispensing liquid and one or more pipetting channels connected to the pipette arms. The pipette module is provided at an upper portion inside the sample preparation unit 1100.

In addition, the liquid handling device may include a transport module (not shown) for transporting various containers used for sample preparation, including an analysis sample vessel, and the transport module is provided at one side of the inside of the sample preparation unit 1100.

In another embodiment of the present disclosure, the transport module is configured on the upper side of the interior of the sample preparation unit 1100 together with the pipette module.

In another embodiment of the disclosure, the transport module is configured with a pipetting channel of the pipetting module and a gripper (not shown) coupled to the pipetting channel.

Each component located in the deck 1110 of the sample preparation unit 1100 is disposed at a predetermined location for preparation of the analysis sample.

A second local opening 1110-9 is formed in the deck 1110. The second local opening 1110-9 is a space in which the lift module 1330 that is moved from the sample analysis unit 1200 is moved. The second local opening 1110-9 is formed to vertically correspond to the first local opening 1270 of the sample analysis unit 1200. The second local opening 1110-9 is sized to allow the vertical motion guide 1332 and the analysis sample vessel rack 1333 of the lift module 1330 to move.

In an embodiment of the present disclosure, each component disposed in the deck 1110 may be explained with reference to FIG. 27. FIG. 27 is a layout diagram illustrating that the components of the sample preparation unit according to an embodiment of the present disclosure are disposed on the deck.

All components of the sample preparation unit 1100 are designed as an integrated device and are located above the sample analysis unit 1200. The sample preparation unit 1100 includes a nucleic acid extraction module for extracting nucleic acid of a specimen and various components for amplification reaction setup (for example, PCR setup).

Although not shown in the drawings, the inside of the sample preparation unit 1100 according to an embodiment may include a pipette tip adapter, a container carrier, a nucleic acid extraction module, a multi-well plate adapter, a scanner, a waste liquid inlet, a transfer module, a pipette module, etc.
1) A pipette tip adapter holds one or more pipette tips coupled to a pipetting channel. The pipette tip may be coupled to the pipetting channel to aspirate and dispense a solution, such as a specimen or reagent, contained in the container. The pipette tip adapter may be disposed in the pipette tip adapter section 1110-1, 1110-7.

The one or more pipette tips accommodated in the pipette tip adapter may be provided to have different sizes and dispensing amounts according to a preparation operation environment such as a size of a container and a volume of a dispensed solution.

In an embodiment of the present disclosure, the pipette tip adapter of the sample preparation unit may be provided in a plurality to accommodate tips of various capacities such as 1mℓ, 500*µ*ℓ, 300*µ*ℓ, 250*µ*ℓ, 200*µ*ℓ, 150*µ*ℓ, 100*µ*ℓ, and/or 50. Further, any one or more of the tips of various capacities may be piercing tip.

Each pipette tip adapter can accommodate one or more pipette tips, and the pipette module positions the pipetting channel above the pipette tip adapter and then moves it in the direction of the pipette tip so that the pipetting channel can be engaged with the pipette tip.

The number of pipette tip adapters and each capacity and size of a pipette tip accommodated in the pipette tip adapter may be modified or changed according to various embodiments of the present disclosure.

2) The container carrier includes various containers for holding various types of solutions used in the sample preparation device. The sample preparation device may prepare an analysis sample including the extracted nucleic acid using a nucleic acid extraction module. Various types of containers are used for the operation of the sample preparation device, and the container carrier may include containers other than a well plate. The container carrier may be disposed in the specimen/reagent section 1110-2.

The container carrier may be provided in various forms to allow each container to be easily inserted and fixed depending on a capacity and/or a size of the container to be inserted.

In an embodiment of the present disclosure, the inserted container includes a container for accommodating the specimen, a container for accommodating the extraction reagent, and a container for accommodating the reaction reagent. The container carrier may insert containers in a row or in parallel.

The container carrier may have an opening on the side to allow the identification code printed or attached to the container to be exposed. Accordingly, the scanner located in the deck 1110 may recognize the exposed identification code.

3) A nucleic acid extraction module automatically performs a detection sample preparation process used for detecting a target nucleic acid sequence in a sample preparation device. The nucleic acid extraction module may be located in the nucleic acid extraction section 1110-6. A cartridge or the like for extracting nucleic acids may be disposed in the extraction cartridge section 1110-3.

In the present disclosure, the sample preparation process for detection includes a process of extracting nucleic acid from a specimen, preparing a reaction mixture for amplification, and preparing a detection sample in which the reaction mixture and the extracted nucleic acids are mixed.

If a nucleic acid extraction module is not included in the preparation device, the sample may be a nucleic acid obtained through a nucleic acid extraction process in advance.

In another embodiment, the nucleic acid extraction is frequently performed by a magnetic bead-based method using magnetic beads that bind to a nucleic acid and are capable of eluting the bound nucleic acid. The magnetic bead-based automated nucleic acid extraction method may use a liquid transfer method or a bead transfer method according to the type of the process of eluting the nucleic acid bound to the magnetic bead.

4) The multi well plate adapter is a structure in which an analysis sample vessel for accommodating a sample to be detected may be located, and the analysis sample vessel may be mounted on a sample holder of the sample analysis device. The multi-well plate adapter may be disposed in the multi-well plate section 1110-5.

The multi-well plate adapter may load a reaction vessel (multi-well plate), and a sample for detection may be dispensed to the reaction vessel (multi-well plate) positioned in the multi-well plate adapter. In the multi-well plate adapter, two or more multi-well plates used in the preparation device may be stacked. In an embodiment of the present disclosure, the term "multi-well plate" may be used as an analysis sample vessel adapter.

At this time, any one of the plurality of multi-well plates provided in the multi-well plate adapter may be moved to the starting position 1110-4 and used in an operation for preparing an analysis sample. The multi well plate is moved to the starting position by the transport module.

5) Various containers may be mounted on the fixing frame section 1110-8 directly or through an adapter, etc. The container may contain an analysis sample or extraction reagent. The container is equipped with a cap, which can be a pierceable cap pierceable by a pipette tip. The penetrating portion of the cap may be made of a material such as silver rubber, silicon, plastic, etc.

The pipette tip pierces the upper portion of the cap by a descending movement, performs aspirating or dispensing of the solution, and then moves upward again. When the pipette tip moves upward from the container, the container needs to be fixed because the container can be lifted together upward by the pipette tip inserted into the penetrating portion of the cap. The fixing frame can fix the container so that the container using pierceable cap is not moved by the pipette tip.

6) The second local opening 1110-9 is a space in which the lift module 1330 provided in the sample analysis unit 1200 is moved to the sample preparation unit 1100 to receive the analysis sample vessel (see FIG. 5).

In an embodiment of the present disclosure, the second local opening 1110-9 is an empty space. The lift module 1330 is moved into the sample preparation unit 1100 through the upper part of the sample analysis unit 1200 located at the lower part of the sample preparation unit 1100. Therefore, it is preferable that the second local opening 1110-9, which is an empty space, is formed in the deck 1110, which is the lower surface of the sample preparation unit 1100.

In another embodiment of the present disclosure, the second local opening 1110-9 includes an open/close module (not shown). The open/close module is provided to block the open space into which the lift module 1330 enters. The lift module 1330 is moved from the sample analysis unit 1200 to the sample preparation unit to receive the analysis sample vessel prepared in the sample preparation unit 1100. The sample preparation unit 1100 may block the second local opening 1110-9 using an open/close module to close the open space when the lift module 1330 is not moving.

7) The waste inlet section 1110-10 includes a waste liquid inlet and/or a waste pipette tip collecting unit. The waste liquid inlet may collect the solution used for the preparation of the analysis sample to be discarded, and the waste pipette tip collecting unit may collect the pipette tip used for the preparation of the analysis sample to be discarded.

In the embodiment of the present disclosure, the waste liquid inlet is connected to a liquid waste collection bin 1250 provided in the sample analysis unit 1200. The waste liquid of the sample preparation unit 1100 is moved to be accommodated in the liquid waste collection bin 1250 through the waste liquid inlet.

Also, the pipette tip collected by the waste pipette tip collecting unit may be moved to and stored in a waste container, which is disposed in the sample preparation unit 1100, in the sample analysis unit 1200, or between the sample preparation unit 1100 and the sample analysis unit 1200.

In the waste container, a container in which the pipette tip is collected and an area in which the analysis sample is prepared may be separated by a partition.

8) The transport module is a mechanical device in the form of a gripper for moving an analysis sample vessel and the like in the sample preparation unit 1100. The transport module is operated by a control device of the molecular diagnostic system 1000.

In an embodiment of the present disclosure, the transport module disposed in the transport module section 1110-11 is located at the rear inside the sample preparation unit 1100. The transport module is configured to move the analysis sample vessel up and down, left and right, forward and backward, and rotationally.

In another embodiment of the present disclosure, the transport module is disposed at an inner upper portion of the sample preparation unit 1100. The transfer module is configured to move the reaction vessel up and down, left and right, forward and backward, and rotate through an operation type such as a pipette module.

In another embodiment of the present disclosure, the transport module is configured to move the reaction vessel up and down, left and right, forward and backward, and rotationally using a gripper coupled to at least two pipetting channels of the pipetting channels of the pipetting module.

The transport module may move components necessary for preparation of an analysis sample, such as a reaction vessel, a reagent container, an adapter, a cartridge, a multi-well plate, etc. within the sample preparation unit 1100.

In an embodiment of the present disclosure, the transport module may move the analysis sample vessel in which the set-up of the analysis sample is completed to the analysis sample vessel rack 1333 of the lift module 1330. The lift module 1330 is moved from the sample analysis unit 1200 to the sample preparation unit 1100 to receive the analysis sample vessel in which the set-up of the analysis sample is completed. The transport module may move the analysis sample vessel to the analysis sample vessel rack 1333 connected to the lift module 1330, and the lift module 1330 may move the analysis sample vessel placed on the analysis sample vessel rack 1333 into the sample analysis unit 1200.

9) A scanner located in the scanner section 1110-12 may read an identification code displayed on a specimen, a reagent, a reagent, a reaction solution, etc. The identification code is a mark including information such as a barcode and a matrix code. The scanner may recognize the identification code and receive information such as the type and volume of the solution contained in the container.

In an embodiment of the present disclosure, a plurality of scanners may be provided and may be composed of any one scanner as necessary. Further, the scanner may be configured as a barcode scanner and/or a 2D scanner. It is preferable that such a configuration is provided so as to be able to recognize different types of identification codes marked on an analysis sample vessel.

In an embodiment of the disclosure, the scanner may recognize 1D and/or 2D barcodes. The scanner may recognize an identification code printed or attached to the side of the container to obtain information such as the type and/or volume of the solution contained in the container. The container includes an analysis sample vessel, a reagent container, and a specimen container used in a sample preparation device. The scanner may recognize the identification code of the container inserted into the deck 1110. The scanner may sequentially recognize at least one container identification code inserted into the deck 1110. The scanner may recognize the identification code on the side of the container by moving to the position where the container or the carrier containing the container is coupled to the deck 1110.

In another embodiment of the disclosure, the scanner is a 2D barcode scanner (not shown). Matrix (two-dimensional) codes can be recognized, and identification codes printed or attached to the bottom surface of the container can be recognized. The container includes a container used in a sample preparation device such as an analysis sample vessel, a reagent container, and a specimen container.

Accordingly, when a plate configured to have an opening in all or part of the bottom surface of each well is mounted on the scanner, the scanner can recognize the identification code printed or attached to the bottom surface of the container inserted into the plate. The scanner may recognize the codes of multiple containers inserted into the plate at once.

In an embodiment of the present disclosure, the plane on which the container is mounted in the scanner may be made of a transparent material. The scanner may recognize the identification code of the bottom of the container using an optical signal that transmits the transparent material. In addition, the scanner may recognize the identification code of the container by photographing the bottom of the container. The scanner may be designed to accommodate a multi-well plate so that it can recognize the identification code located on the bottom of the container inserted into the multi-well plate.

The 2D scanner according to an embodiment of the present disclosure may use "easyCode Carrier" product of Hamilton (see https://www.hamiltoncompany.com/automated-liquid-handling/small-devices/easycode-carrier).

10) Although not shown in the drawings, the pipette module is included in the liquid handling device and is located in an upper portion of the sample preparation unit 1100. A pipette module, which is a solution fractionator, includes a pipette arm and a pipetting channel, and the pipetting channel may be automatically moved up and down, left and right, forward and backward by a control device.

The pipette arm may include one or more pipetting channels that move independently or dependently. In an embodiment, a pipette tip or needle is coupled to the end of the pipetting channel and can be used to aspirate and dispense a solution.

In another embodiment, a gripper may be coupled to an end of the pipetting channel, and may be used as a transport module capable of moving a vessel (including a sample analysis vessel), used in the sample preparation unit 1100 for the reaction vessel, or the like, by the gripper.

The pipette arm may perform an operation of moving one or more pipetting channels to a fractionating pipette tip, an operation of fixing the fractionating pipette tip to the pipetting channel, an operation of moving the pipetting tip to which the pipetting channel is fixed to a predetermined place, an operation of inserting the fractionating pipette tip into a container at a predetermined depth, etc.

The pipette arm is disposed on the upper side inside the sample preparation unit 1100, and the pipetting channel is operated within the sample preparation unit 1100 by the pipette arm. The one or more pipetting channels may couple the pipette tip in the pipette tip adapter to an end of the pipetting channel.

The pipette arm may move the pipetting channel to be positioned above the container containing the solution to be dispensed. The pipetting channel is lowered to the container at the position to accommodate the solution in the pipette tip, and then rise again. The pipetting channel may move to the top of another container to be dispensed by the pipette arm, descend to dispense the solution contained in the pipette tip, and then rise again to end dispensing.

The plurality of pipetting channels may be simultaneously operated, and the number of containers that can be simultaneously dispensed may be determined according to the number of pipetting channels.

The pipette arm and pipetting channel may remove the pipette tip coupled to the end after the dispensing is complete. The combined pipette tips may be removed from the waste pipette tip collecting unit located in the waste inlet section 1110-10 and discarded in a waste container.

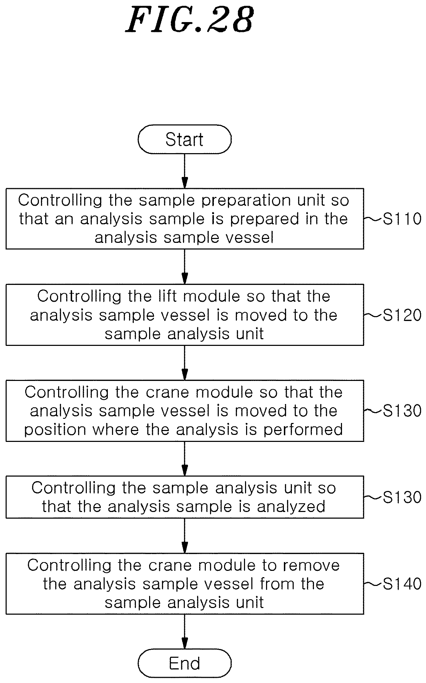

FIG. 28 is a flowchart illustrating a method of operating a molecular diagnostic system according to an embodiment of the present disclosure. As shown in FIG. 28, the molecular diagnostic system described with reference to FIGS. 1 to 27 includes a sample preparation unit as a sample preparation device and a sample analysis unit including a sample analysis device. Each of the sample preparation device and the sample analysis device included in the molecular diagnostic system may be operated as an individual device.

As in an embodiment of the present disclosure, the molecular diagnostic system is configured such that a sample analysis device is provided inside a sample analysis unit and a sample preparation unit is positioned on the sample analysis unit.

The molecular diagnostic system includes a system control module. The system control module controls the sample preparation unit to prepare an analysis sample. The system control module controls the sample analysis unit to analyze the prepared analysis sample.

A method in which the system control module of the molecular diagnostic system controls the sample preparation unit and the sample analysis unit to prepare and analyze the analysis sample is as follows.

The system control module controls the sample preparation unit so that an analysis sample is prepared in the analysis sample vessel provided in the sample preparation unit (S110).

The sample preparation unit prepares a solution such as a specimen, a nucleic acid extraction reagent, an amplification reaction reagent, and prepares the analysis sample using internal components.

In step S110, the sample preparation unit, which is controlled by the system control module to prepare analysis samples, is a sample preparation device.

The sample preparation unit may perform at least one preparation of: preparing the analysis sample by dispensing of at least one of a specimen and a reagent; accommodating the analysis sample in the analysis sample vessel; or extracting nucleic acid from the specimen expected to contain a pathogen.

The system control module controls the lift module in the sample analysis unit so that the analysis sample vessel prepared in the sample preparation unit is moved to the sample analysis unit (S120).

In step S120, the lift module moves into the sample preparation unit through the first local opening formed in the sample analysis unit and the second local opening formed in the deck of the sample preparation unit. The sample preparation unit mounts the analysis sample vessel on the moved lift module.

When the analysis sample vessel is mounted on the lift module, the system control module controls the lift module to move to the sample analysis unit.

In an embodiment of the present disclosure, the sample analysis unit may include a plurality of sample analysis devices for analyzing the analysis samples.

The system control module controls the sample preparation unit so that analysis samples to be analyzed can be prepared simultaneously or sequentially using the plurality of analysis devices.

The system control module controls the lift module so that the lift module can transport the analysis sample vessel that accommodate the analysis sample prepared simultaneously or sequentially in the sample preparation unit to the sample analysis unit.

In step S120, when the lift module is moved to the sample preparation unit to receive the analysis sample vessel, the system control module controls the lift module to perform an extension movement in a horizontal direction to easily receive the analysis sample vessel.

The system control module controls the crane module such that the analysis sample vessel moved to the sample analysis unit is moved to the position where the analysis is performed (S130).

The crane module may perform a movement operation for moving the analysis sample vessel moved to the sample analysis unit in up/down/left/right/forward/backward directions. The crane module may perform a rotation motion for horizontally rotating the analysis sample vessel.

In an embodiment of the present disclosure, the automatic sealer is included within the sample analysis unit.

When the automatic sealer is provided in the sample analysis unit, the system control module controls the crane module to move the analysis sample vessel moved from the sample preparation unit to the automatic sealer. The automatic sealer may seal the upper surface of the analysis sample vessel.

The system control module controls the crane module so that the analysis sample vessel sealed in the automatic sealer is moved to a position where the analysis of the analysis sample is performed. A location where the analysis is performed is the sample analysis device.

In another embodiment of the present disclosure, the automatic sealer may be included in the sample preparation unit.

When an automatic sealer is provided in the sample preparation unit, the system control module moves an analysis sample vessel prepared in the sample preparation unit to the automatic sealer. The system control module controls the automatic sealer to seal the upper surface of the moved analysis sample vessel.

When the automatic sealer is provided in the sample preparation unit, in step S120, the lift module may receive the analysis sample vessel in which sealing is completed.

In an embodiment of the present disclosure, when a plurality of analysis devices is provided and a plurality of analysis sample vessels are sequentially received in the sample preparation unit, the system control module controls the crane module to move each of the sequentially moved analysis sample vessels to the analysis device.

The system control module controls the sample analysis unit so that the analysis sample accommodated in the analysis sample vessel in the sample analysis unit is analyzed (S140).

In step S140, the analysis sample vessel may be moved to the analysis device by the crane module. The analysis device analyzes an analysis sample of the moved analysis sample vessel and generates a result.

In step S140, the sample analysis unit in which the system control module controls the sample analysis unit such that analysis of the analysis sample is performed is an analysis device.

The sample analysis device may perform at least one of a process of performing a polymerase chain reaction and a process of performing analysis on a reaction result.

The sample analysis device is provided at a position where the analysis is performed.

The sample analysis device includes a thermal cycler and an optics module. The thermal cycler is used in the process of performing the polymerase chain reaction in the sample analysis device, and the optical module is used in the process of measuring a reaction result.

The sample analysis device may be provided with a cover for analysis of the analysis sample. The system control module may provide a control signal to the sample analysis device to open the cover of the sample analysis device to which the analysis sample vessel is to be moved. Thereafter, when the crane module provides the analysis sample vessel to the sample analysis device, the system control module may provide a control signal to close the cover of the sample analysis device.

The system control module controls the crane module to remove the analysis sample vessel of which the analysis is completed from the position where the analysis is performed (S150).

In step S150, the system control module controls the crane module so that the analysis sample vessel of which the analysis has been completed can be moved to the first analysis sample vessel retrieval container or the second analysis sample vessel retrieval container.

### A method for processing and analyzing a sample in a molecular diagnostic system

According to an aspect of the present disclosure, the present disclosure provides a method of processing and analyzing a sample in a molecular diagnostic system including the following steps.
(a) preparing an analysis sample in a reaction vessel using a liquid handling device of a sample preparation unit of the molecular diagnostic system; wherein the molecular diagnostic system comprises a sample preparation unit, a sample analysis unit, and a transport device; wherein the sample preparation unit, the sample analysis unit, and the transport device are enclosed; wherein the sample preparation unit and the sample analysis unit are aligned such that the reaction vessel is transportable from the sample preparation unit to the sample analysis unit by the transport device;
(b) transporting the reaction vessel from the sample preparation unit to the sample analysis unit by the transport device through a passage formed by a first local opening of the sample analysis unit and a second local opening of the sample preparation unit; and
(c) amplifying and analyzing the analysis sample accommodated in the reaction vessel in the sample analysis unit; wherein the second local opening of the sample preparation unit is located at a lower surface or a side surface of the sample preparation unit; wherein the first local opening of the sample analysis unit is located at an upper surface or a side surface of the sample analysis unit; wherein the first local opening of the sample analysis unit is a gate-type opening, and is opened during the transporting step of step (b), and closed during the sample preparation and sample analysis of steps (a) and (c).

Hereinafter, a method of processing and analyzing the sample will be described in detail step by step.

Among the components described in the embodiment of the present disclosure, those overlapping the description of the molecular diagnostic system of FIGS. 1 to 28 will be omitted.

### (a) Preparation step. Step of preparing an analysis sample in a reaction vessel using a liquid handling device of a sample preparation unit of the molecular diagnostic system

In the preparation step (a), an analysis sample is prepared in a reaction vessel.

The preparation of the analysis sample is performed through the molecular diagnostic system of the present disclosure. The molecular diagnostic system includes: a sample preparation unit, a sample analysis unit, and a transport device. The sample preparation unit, the sample analysis unit, and the transport device are enclosed. The sample preparation unit and the sample analysis unit are aligned such that reaction vessels is transportable from the sample preparation unit to the sample analysis unit by the transport device.

Specifically, the preparation of the analytical sample is performed using a liquid handling device in the sample preparation unit.

The analysis sample preparation may include a step of extracting a nucleic acid sample from the specimen. The preparing of the analysis sample may include a step of mixing the extracted nucleic acid with a reaction reagent for analysis in order to analyze the extracted nucleic acid. The nucleic acid extraction may include the step of disrupting cells contained in the specimen, and the step of isolating nucleic acids from the disrupted material. The disruption of cells for exposing active ingredients such as nucleic acids may be performed by physical or chemical processing methods such as heat processing, ultrasonic processing, acid, and base processing. The nucleic acid extraction may be performed through a nucleic acid extraction process known in the art (see, e.g., Sambrook, J. et al., Molecular Cloning. A Laboratory Manual, 3rd ed. Cold Spring Harbor Press (2001)). The nucleic acid extraction process may vary depending on the type of the specimen.

Reaction solutions or reagents for analyzing extracted nucleic acids may include buffers, stabilizers, enzymes, salts, nucleic acid fragments, dNTP, detection probes, optical labels, and supporting or separating polymer beads, resins, etc.

According to an embodiment of the present disclosure, the step (a) of preparing an analysis sample may include: extracting, by the liquid handling device, a nucleic acid sample from a specimen; and preparing an analysis sample including the extracted nucleic acid and a reaction reagent.

In order to perform the preparation step, the sample preparation unit may be provided with a sample container in which a specimen is contained, a reagent container in which a reagent used for extraction and/or the reaction solution described above is contained, and a reaction vessel in which a mixture of a nucleic acid extracted from the specimen and the reaction reagent is contained.

The containers should be disposed at a predetermined position in the sample preparation unit so that the liquid handling device can process the accurate solution according to a predetermined order. To this end, as shown in FIG. 27, the deck 1110 of the sample preparation unit is configured to dispose each element at a predetermined position. Therefore, according to an embodiment of the present disclosure, the sample preparation unit may include a liquid handling device and a deck in which the reaction vessel, the reagent container, and the sample container are located.

According to an embodiment of the present disclosure, the preparing step (a) may include preparing a positive control reaction mixture.

The positive control reaction mixture is for confirming that the analysis reaction has been normally performed. The positive control reaction mixture is a mixture of reaction solutions or reagents for analyzing nucleic acids from which the same substances (positive control substances) as the target analyte to be detected in the sample are extracted. To prove the validity of the analysis, the positive control reaction mixture is reacted simultaneously with the analysis sample under the same conditions.

The positive control vessel is a container containing the positive control material. A positive control vessel accommodates a high concentration of a positive control material. When the positive control material is contaminated with the analysis sample, valid analysis is impossible. Therefore, the possibility of contamination may be minimized by using the positive control vessel to which the pierceable cap is attached in the molecular diagnostic system. The pierceable cap is a stopper for a liquid sample storage container which can prevent evaporation or contamination of a solution while a pipette can enter the storage container in a state of being coupled to the stopper without opening and closing the stopper.

According to an embodiment of the present disclosure, the reagent container may include a positive control vessel having a pierceable cap attached thereto, and the step (a) of preparing of the analysis sample may include preparing a positive control reaction mixture in the reaction vessel by the liquid handling device piercing through the pierceable cap of the positive control vessel.

### (b) Transporting step. Step of transporting the reaction vessel from the sample preparation unit to the sample analysis unit by the transport device through a passage formed by a first local opening of the sample analysis unit and a second local opening of the sample preparation unit.

In the transporting step (b), the reaction vessel is transported.

The transported reaction vessel is the reaction vessel provided by the sample preparation unit in the (a) preparation step. The reaction vessel is, not limited thereto, but may be, for example, an analysis sample vessel, which is a reaction vessel that can be accommodated in a sample analysis device of the sample analysis unit. According to an embodiment, the analysis sample vessel may be a reaction vessel containing a predetermined amount of an analysis sample containing a target nucleic acid or a predetermined amount of an analysis sample not containing a target nucleic acid.

The local opening refers to an opening that is formed only in one part of the entire region. The first local opening is located locally in the sample analysis unit. The second local opening is located locally in the sample preparation unit.

The method of the present disclosure uses a molecular diagnostic system in which the first local opening is formed in the sample analysis unit and the second local opening is formed in the sample preparation unit, and the method of the present disclosure is characterized in a reaction vessel is transported by a transport device through a passage formed by the first local opening of the sample analysis unit and the second local opening of the sample preparation unit.

The second local opening of the sample preparation unit is located at the lower surface or the side surface of the sample preparation unit, and the first local opening of the sample analysis unit is located at the upper surface or the side surface of the sample analysis unit. Specifically, according to an embodiment, the second local opening may be located at the lower surface of the sample preparation unit, and the first local opening may be located at the upper surface of the sample analysis unit. Such arrangement of the local openings is suitable when the sample analysis unit is positioned under the sample preparation unit and is arranged vertically.

According to another embodiment, the second local opening may be located on a side surface of the sample preparation unit, and the first local opening may be located on a side surface of the sample analysis unit. Such arrangement of the local opening is suitable when the sample analysis unit and the sample preparation unit are positioned side by side and arranged left and right. Specifically, when the sample analysis unit and the sample preparation unit are disposed side by side, according to an embodiment, the first local opening and the second local opening may be disposed on the side surface of the sample analysis unit and the side surface of the sample preparation unit, respectively, to face each other. Alternatively, according to another embodiment, the first local opening and the second local opening may be disposed at a side and rear surface of the sample analysis unit and a side and rear surface of the sample preparation unit, respectively.

Accordingly, the sample analysis unit and the sample preparation unit may maximize the rate of closure to the outside. Also, the exchange of unintended material and energy involved in the transfer of intended material, such as a reaction vessel, between the sample analysis unit and the sample preparation unit can be minimized. Further, the structure of the transport device can be simplified.

The first local opening of the sample analysis unit is a gate-type opening. The gate-type opening is as described in the detailed description of a molecular diagnostic system. The first local opening, which is the gate-type opening, is opened during the transporting step of the step (b), and is closed during the sample preparation and sample analysis of the steps (a) and (c). Thus, the exchange of undesirable substances and energy between the sample analysis unit and the external environment may be minimized.

According to an embodiment of the present disclosure, a sealer may be further included in the sample preparation unit or the sample analysis unit. The sealer seals the inlet of the reaction vessel, in particular the analysis sample vessel. After the sample preparation unit injects the analysis sample into the analysis sample vessel, the sample analysis unit seals the analysis sample vessel before analyzing the analysis sample. Thus, the evaporation and contamination of the analysis sample are prevented. According to an embodiment, the sealer may be an automated sealer.

According to an embodiment of the present disclosure, the transporting step of step (b) may include transporting the reaction vessel containing the analysis sample to the sealer in the sample preparation unit by the liquid handling device, and transporting the sealed reaction vessel to the sample analysis unit by the transport device.

When the sealer is located in the sample preparation unit, the reaction vessel may be moved to the sealer by the liquid handling device.

The reaction vessel including the analysis sample may be transported to the sealer in the sample preparation unit by the liquid handling device by using a gripper channel of the liquid handling device.

The gripper channel is a means for moving a solid object such as a reaction vessel in the liquid handling device. In an embodiment, the gripper channel may be a pipetting channel of a pipetting module of the liquid handling device to which a gripper is coupled.

The sealed reaction vessel is transported to the sample analysis unit by a transport device. The sealed reaction vessel is delivered to a transport device by a liquid handling device.

According to an embodiment of the present disclosure, the transporting of the reaction vessel in the step (b) may include: transporting the reaction vessel including the analysis sample to the sample analysis unit by a lift module of the transport device; transporting the reaction vessel to a sealer of the sample analysis unit by a crane module of the transport device; and transporting the reaction vessel sealed in the sealer to an analysis device of the sample analysis unit by the crane module of the transport device.

When the sealer is located in the sample analysis unit, the reaction vessel may be moved to the sealer by a transport device. Specifically, the reaction vessel including the analysis sample is transported to the lift module of the transport device by the liquid handling device in the sample preparation unit, and the lift module moves the reaction vessel from the sample preparation unit to the inside of the sample analysis unit.

The reaction vessel moved into the sample analysis unit is transported from the lift module to the sealer by the crane module of the transport device to seal. The sealed reaction vessel is transported to the sample analysis device by a crane module again.

According to an embodiment of the present disclosure, the transporting step (b) may include the following steps (b1) to (b3):
(b1) when preparing the analysis sample of the step (a) is completed, placing the transport device at a position capable of accommodating the reaction vessel; (b2) mounting the reaction vessel on the transport device by the liquid handling device; and (b3) transporting the mounted reaction vessel to the sample analysis unit by the transport device through a passage formed by the first local opening of the sample analysis unit and the second local opening of the sample preparation unit.

### (b1) when preparing the analysis sample of the step (a) is completed, placing the transport device at a position capable of accommodating the reaction vessel

When the reaction vessel containing the analysis sample is prepared by the liquid handling device, the transport device moves to a position capable of accommodating the reaction vessel and is located. The transport device moving to the receiving position of the reaction vessel is a lift module. As shown in FIG. 17, when the lift module extends into the sample preparation unit and moves to a position capable of accommodating the reaction vessel, the first local opening, which is the gate-type opening of the sample analysis unit, should be opened. In order to minimize the opening time of the first local opening, the lift module is located in a contracted state in the sample analysis unit, and moves to a position capable of accommodating the reaction vessel when the reaction vessel is ready to be transported.

According to an embodiment of the present disclosure, step (b1) may include the following step (b10).

(b10) sensing, by the transport device, a preparation complete signal recorded after completion of the analysis sample preparation step of the step (a), and moving the transport device.

The method of the present disclosure is a method in which the transfer module is informed that the preparation of the reaction vessel to be transported from the sample preparation unit to the sample analysis unit is completed, and the method as in step (b10) may be used.

The liquid handling device of the sample preparation unit records predetermined information (preparation complete signal) indicating that preparation of the reaction vessel is completed in a specific storage means when preparation of the reaction vessel is completed. The storage means is a storage means to which both the liquid handling device and the transport device can access. The storage means may be, for example, a memory, a processor, or a hard disk, to which a liquid handling device and a transport device are connected by wire or wirelessly. The predetermined information may be creation or deletion of a file or folder of a specific format or name, recording of specific information in a file, or deletion of the recording.

The transport device periodically refers to a position where the predetermined information is to be provided, and senses and moves when the predetermined information is provided.

### (b2) mounting the reaction vessel on the transport device by the liquid handling device

When the transport device reaches a position capable of accommodating the reaction vessel, the liquid handling device mounts the reaction vessel to the transport device.

Specifically, the mounting may be that the gripper channel of the liquid handling device mounts the reaction vessel to the analysis sample vessel rack of the lift module.

Even in step (b2), the liquid handling device should be able to detect whether the lift module, which is the transport device, reaches a position capable of accommodating the reaction vessel.

To this end, according to an embodiment of the present disclosure, step (b2) may include the following step (b20).

(b20) mounting, the reaction vessel on the transport device by the liquid handling device detecting a transport ready signal recorded by the transport device being positioned at a position where the reaction vessel is accommodable.

Similar to step (b10), when the transport device reaches a position capable of accommodating the reaction vessel, the transport device records a transport ready signal, which is predetermined information indicating that preparation for receiving the reaction vessel is completed, in a specific storage means. The storage means is the same as described in step (b10). However, a storage means for recording the transport ready signal and the preparation complete signal, a recording location, and a format of the signal may be different from each other.

It may be recognized by a position sensor that the transport device is located at a position capable of accommodating the reaction vessel. According to an embodiment of the present disclosure, the transport device may include a position sensor, and the step (b2) comprises detecting, by the position sensor, that the transport device is positioned at a position where the reaction vessel is accommodable, and recording a transport preparation completion record according to the detection by the sensor.

The liquid handling device periodically refers to a position at which the transport ready signal is to be provided after recording the preparation complete signal of step (b10), detects the transport ready signal when the transport ready signal is provided, and mounts the reaction vessel in the analysis sample vessel rack of the lift module.

### (b3) transporting the mounted reaction vessel to the sample analysis unit by the transport device through a passage formed by the first local opening of the sample analysis unit and the second local opening of the sample preparation unit.

When the reaction vessel is mounted on the lift module of the transport device by the liquid handling device through steps (b1) and (b2), the transport device transports the mounted reaction vessel to the sample analysis unit. The transport is performed through the movement path which is formed by the first local opening and the second local opening.

The above-described signal transmission scheme is a unique scheme of the present disclosure. According to the method of the present disclosure including the above method, the preparation, transport, and analysis of the reaction vessel can be normally performed even when the liquid handling device and the transport device of the sample preparation unit are not controlled by the same controller or control software.

According to an embodiment of the present disclosure, the sample analysis unit may include a sample analysis device, and the transporting of step (b) may include the following steps (b4) to (b6).

(b4) transporting the reaction vessel from the sample preparation unit to the sample analysis unit by a transport device through the passage formed by the first local opening of the sample analysis unit and the second local opening of the sample preparation unit; (b5) preparing the reaction vessel to be accommodated by the sample analysis device when the transport device is located at a position where the reaction vessel can be transported to the sample analysis device; and (b6) mounting the reaction vessel to the sample analysis device by the transport device.

The sample analysis unit may include a sample analysis device. The sample analysis device is as described in the detailed description of a molecular diagnostic system.

The transport step (b) of the method of the present disclosure may be a step of mounting the reaction vessel prepared in the sample preparation unit on a sample analysis device in the sample analysis unit. To this end, when the transport device transports the reaction vessel to the sample analysis unit and reaches a position to be mounted on the sample analysis device, the sample analysis device prepares to receive the reaction vessel.

The reaction vessel is accommodated by placing the reaction vessel in the reaction vessel accommodating portion of the sample analysis device so that the sample analysis device can perform analysis. Preparation to accommodate the reaction vessel refers to the act of allowing the transport device to position the reaction vessel in the reaction vessel receiving portion of the sample analysis device.

Specific preparation for receiving a reaction vessel of the sample analysis device may vary depending on the structure of the sample analysis device. For example, in the case of the sample analysis device according to an embodiment of FIG. 13, the preparation for receiving the reaction vessel may be to open the cover of the sample analysis device to expose the reaction vessel receiving portion. In the case of the sample analysis device in which the reaction vessel accommodation unit is exposed in the sliding drawer type, the reaction vessel accommodation preparation may be performed in such a manner that the reaction vessel accommodation unit transport device is operated to expose the reaction vessel accommodation unit.

When preparation for receiving the reaction vessel is completed, the transport device mounts the reaction vessel to the sample analysis device. As shown in FIG. 21, the mounting may be performed by moving the reaction vessel to a predetermined position of the sample analysis device by the crane module of the transport device.

According to an embodiment of the present disclosure, step (b5) may include the following step (b50). (b50) Step of the sample analysis device preparing to accommodate the reaction vessel by detecting a transport ready signal recorded by the transport device located at a position capable of transporting the reaction vessel to the sample analysis device.

When the transport device reaches a position capable of transporting the reaction vessel to the sample analysis device and is ready to transport the reaction vessel, a transport ready signal, which is predetermined information indicating that preparation for transporting the reaction vessel is completed, is recorded in a specific storage means. The storage means is a storage means to which both the sample analysis device and the transport device can access. The storage means may be, for example, a memory, a processor, or a hard disk, to which a liquid handling device and a transport device are connected by wire or wirelessly. The predetermined information may be creation or deletion of a file or folder of a specific format or name, recording of specific information in a file, or deletion of the recording.

The sample analysis device periodically refers to a location where the transport ready signal is to be provided, and when the transport ready signal is provided, the sample analysis device detects the same and prepares to accommodate the reaction vessel.

Even in step (b6), the transport device must be able to detect whether the sample analysis device has completed preparation to accommodate the reaction vessel.

To this end, according to an embodiment of the present disclosure, step (b6) may include the following step (b60). (b60) Step of mounting the reaction vessel on the sample analysis device by sensing an accommodation ready signal recorded in a state in which the sample analysis device can accommodate the reaction vessel by the transport device.

Similar to the step (b50), when the sample analysis device is in a state of being capable of receiving the reaction vessel, the sample analysis device records an accommodation ready signal, which is predetermined information indicating that preparation for receiving the reaction vessel is completed, in a specific storage means. The storage means is the same as described in step (b50). However, a storage means for recording the transport ready signal and the accommodation ready signal, a recording location, and a format of the signal may be different from each other.

### (c) Analysis step. amplifying and analyzing the analysis sample accommodated in the reaction vessel in the sample analysis unit.

In step (c), an analysis sample is analyzed using the reaction vessel transported to the sample analysis unit. The analysis is performed by a sample analysis device of a sample analysis unit.

The analysis may mean, for example, obtaining information on the presence, content, concentration, sequence, activity, or characteristic of an analyte in a sample. Analytes may include a variety of substances (e.g., biological substances and non-biological substances such as compounds). Specifically, the analytes may include biological materials such as nucleic acid molecules (e.g., DNA and RNA), proteins, peptides, carbohydrates, lipids, amino acids, biological compounds, hormones, antibodies, antigens, metabolites, and cells. According to an embodiment of the present disclosure, the analyte may be a nucleic acid molecule.

The sample analysis device of the present disclosure may be a target nucleic acid detection device. A target nucleic acid detection device allows a nucleic acid reaction in a sample to proceed, and a target nucleic acid is detected through this.

A nucleic acid reaction refers to a series of physical and chemical reactions that generate a signal depending on the presence or amount of a nucleic acid of a specific sequence in a sample. The nucleic acid reaction may be a reaction including a binding between a nucleic acid of a specific sequence in a sample and another nucleic acid or material, or a replication, cleavage, or degradation of a nucleic acid of a specific sequence in the sample. The nucleic acid reaction may be a reaction accompanied by a nucleic acid amplification reaction. The nucleic acid amplification reaction may include amplification of a target nucleic acid. The nucleic acid amplification reaction may be a reaction that specifically amplifies a target nucleic acid.

The nucleic acid reaction may be a signal-generation reaction that may generate a signal depending on the presence/absence or amount of a target nucleic acid in a sample. This signal-generating reaction may be a genetic analysis process such as PCR, real-time PCR, microarray, etc.

Various methods of generating an optical signal indicating the presence of a target nucleic acid using a nucleic acid reaction are known. Representative examples include the following: TaqMan^{™} probe method (U.S. Pat. No. 5, 210, 015), molecular beacon method (Tyagi et al., Nature Biotechnology v. 14 MARCH 1996, Scorpion method (Whitcombe et al., Nature Biotechnology 17: 804-807(1999)), Sunrise or Amplifluor method (Nazarenko et al., 2516-2521 Nucleic Acids Research, 25(12): 2516-2521(1997), and U.S. Pat. No. 6, 117, 635), Lux method (U.S. Pat. No. 7, 537, 886), Duck P (CPT), et al. Biotechniques, 9:142-148(1990), LNA method (U.S. Pat. No. 6,977,295), Plexor method (Sherrill CB, etc., Journal of the American Chemical Society, 126:4550-4556(2004)), Hybeacons^{™} (D). J. French, et al., Molecular and Cellular Probes (2001) 13, 363-374 and U.S. Pat. No. 7, 348, 141), Dual-labeled (self-quenched probe; U.S. Pat. No. 5, 876, 930), Bernard PS, et al., Clin Chem 2000, 46, 147-148, PTO Cleavage and Extension (PTOCE) method (WO 2012/096523), PCE-SH (PTO Cleavage and Extension-Dependent Signaling Hybridization) method (WO 2013/115442), PCE-NH (PTO Cleavage and Extension-Dependent Non-Hybridization) method (PCT/KR2013/012312) and CER method (WO 2011/037306).

The target analyte detection device according to an embodiment of the present disclosure may be a nucleic acid detection device, and may detect a signal generated depending on the presence of a target nucleic acid. A nucleic acid detection device may amplify and detect a signal together with nucleic acid amplification. Alternatively, the nucleic acid detection device may amplify and detect a signal without accompanying nucleic acid amplification. Preferably, the signal is detected by nucleic acid amplification.

A sample analysis device according to an embodiment of the present disclosure may include a nucleic acid amplification device. The nucleic acid amplification device refers to a device capable of performing a nucleic acid amplification reaction that amplifies a nucleic acid having a specific nucleotide sequence.

According to an embodiment of the present disclosure, the sample analysis unit may include a ventilation apparatus configured to form an air-out flow.

Since the nucleic acid reaction by the sample analysis device proceeds inside the sample analysis unit, a lot of heat is generated. In order to control the temperature inside the sample analysis unit, the sample analysis unit may include a ventilation apparatus.

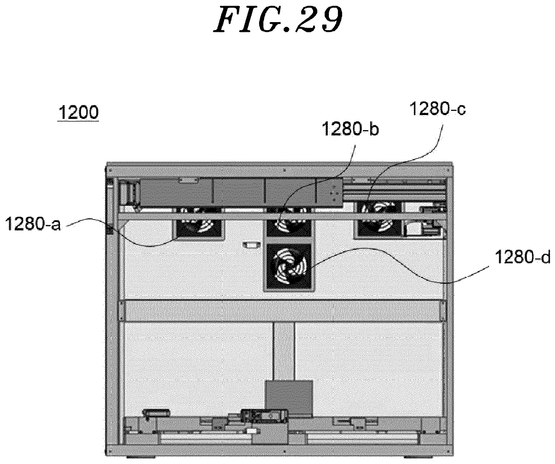

FIG. 29 illustrates the inside of the sample analysis unit 1200 in which the ventilation apparatus 1280 according to an embodiment of the present disclosure is disposed. The ventilation apparatus 1280 controls an internal environment of the sample analysis unit 1200. According to an embodiment, the ventilation apparatus may be a ventilation fan. According to an embodiment, the sample analysis unit 1200 may include one or more ventilation apparatuses. FIG. 29 illustrates that four ventilation fans 1280-a, 1280-b, 1280-c, and 1280-d are disposed as ventilation apparatuses. The four ventilation fans may be configured to be entirely turned on or off by one power source. The four in the alternative ventilation fans may be configured to selectively operate only some of the ventilation fans according to a change in the internal environment.

According to an embodiment, a duct for guiding the air discharged by the ventilation fan may be additionally configured. Accordingly, it is possible to prevent the air discharged by the ventilation fan from approaching the sample preparation unit located on the upper part of the closed structure.

According to an embodiment of the present disclosure, the ventilation apparatus may be operated while performing the step (c). According to an embodiment of the present disclosure, the ventilation apparatus may not be operated during the transporting step of the step (b) and/or the sample preparing step of the step (a).

The sample analysis device generates a lot of heat during the operation process. Since the ventilation apparatus has an effect of discharging heat generated from the sample analysis device inside the sample analysis unit, the ventilation apparatus should be operated while performing step (c) of operating the sample analysis device.

When in the alternative the sample analysis device is in a standby state by power applied thereto in the entire process of processing and analyzing the sample in the molecular diagnostic system, the ventilation apparatus should also be operated in the entire process of operating the molecular diagnostic system.

However, while the reaction vessel is being moved to the sample analysis part, it is necessary to stop the ventilation apparatus in the sample analysis part to prevent contamination. The contamination includes both contamination of the sample analysis unit by substances in the reaction vessel and contamination of the reaction vessel by substances in the air in the sample analysis unit.

Therefore, according to an embodiment of the present disclosure, the ventilation apparatus may not be operated while the transporting step of the step (b) is performed. Alternatively, the ventilation apparatus may not be operated from when the reaction vessel is carried into the sample analysis unit by the transport device until analysis by the sample analysis device starts. In this case, the reaction vessel may be an unsealed reaction vessel.

Meanwhile, the method of the present disclosure may further include a step of discarding the reaction vessel when the analysis step (c) is finished. According to an embodiment of the present disclosure, the method may further include, after performing step (c), discarding the reaction vessel by the crane module of the transport device.

FIG. 22 is an exemplary view showing that a crane module according to an embodiment of the present disclosure loads a reaction vessel of which analysis is completed into an analysis sample vessel retrieval container. FIG. 23 is an exemplary diagram showing that a reaction vessel is collected in an analysis sample vessel retrieval container according to another embodiment of the present disclosure.

As shown in FIGS. 22 and 23, the discarding step may include moving the reaction vessel to the sample vessel retrieval container 1260, 1261. As shown in FIG. 23, the sample vessel retrieval container may be located outside the sample analysis unit. In this case, contamination of the sample analysis unit by the material leaked from the discarded reaction vessel may be prevented.

According to an embodiment of the present disclosure, the sample preparation unit may perform UV irradiation while the molecular diagnostic system is maintained in a non-operational state and/or while step (c) is performed.

The UV irradiation is for sterilization in the sample preparation unit. The UV irradiation of the present disclosure may in particular be performed while performing step (c). According to the method of the present disclosure, the first local opening of the sample analysis unit is a gate-type opening, and the first local opening is closed while the step (c) is performed as a feature. Therefore, even when UV irradiation is performed in the sample preparation unit while performing the step (c), the UV does not affect the sample analysis unit in which analysis of the analysis sample is being performed.

The description of the present disclosure in the specification describes preferred embodiments, and the present disclosure is not limited to such embodiments. Those skilled in the art may make various changes and modifications to the above embodiments without departing from the technical spirit of the present disclosure, and the technical spirit of the present disclosure includes all of the various changes and modifications.

## Claims

1. A method for processing and analyzing a sample in a molecular diagnostic system comprising:
(a) preparing an analysis sample in a reaction vessel using a liquid handling device of a sample preparation unit of the molecular diagnostic system; wherein the molecular diagnostic system comprises a sample preparation unit, a sample analysis unit, and a transport device; wherein the sample preparation unit, the sample analysis unit, and the transport device are enclosed; wherein the sample preparation unit and the sample analysis unit are aligned such that the reaction vessel is transportable from the sample preparation unit to the sample analysis unit by the transport device;
(b) transporting the reaction vessel from the sample preparation unit to the sample analysis unit by the transport device through a passage formed by a first local opening of the sample analysis unit and a second local opening of the sample preparation unit; and
(c) amplifying and analyzing the analysis sample accommodated in the reaction vessel in the sample analysis unit; wherein the second local opening of the sample preparation unit is located at a lower surface or a side surface of the sample preparation unit; wherein the first local opening of the sample analysis unit is located at an upper surface or a side surface of the sample analysis unit; wherein the first local opening of the sample analysis unit is a gate-type opening, and is opened during the transporting step of step (b), and closed during the sample preparation and sample analysis of steps (a) and (c).

2. The method of claim 1, wherein the sample preparation unit is configured to perform UV irradiation while the molecular diagnostic system is maintained in a non-operational state and/or while performing step (c).

3. The method of claim 1, wherein the second local opening of the sample preparation unit is a gate-type or non-gate-type opening.

4. The method of claim 3, wherein the second local opening of the sample preparation unit is a non-gate type opening, and is located at a lower surface of the sample preparation unit.

5. The method of claim 1, wherein the sample analysis unit comprises a ventilation apparatus configured to form an air-out flow.

6. The method of claim 5, wherein the ventilation apparatus is operated while said step (c) is performed.

7. The method of claim 5, wherein the ventilation apparatus is not operated during the transporting of said step (b) and/or the sample preparing of said step (a).

8. The method of claim 1, wherein the system further comprises a sealer in the sample preparation unit or the sample analysis unit.

9. The method of claim 8, wherein the transporting of the reaction vessel comprises transporting the reaction vessel containing the analysis sample to the sealer in the sample preparation unit through the liquid handling device, and transporting the sealed reaction vessel to the sample analysis unit by the transport device.

10. The method according to claim 8, wherein the transporting of the reaction vessel comprises transporting the reaction vessel containing the analysis sample to the sample analysis unit by a lift module of the transport device, transporting the reaction vessel to a sealer of the sample analysis unit by a crane module of the transport device, and transporting the reaction vessel sealed in the sealer to a sample analysis device of the sample analysis unit by the crane module of the transport device.

11. The method of claim 1, wherein the sample preparation unit comprises a liquid handling device and a deck in which the reaction vessel, a reagent container, and a sample container are located.

12. The method of claim 1, wherein said step (a) of preparing an analysis sample comprises: extracting, by the liquid handling device, a nucleic acid sample from a specimen; and preparing an analysis sample comprising the extracted nucleic acid and a reaction reagent.

13. The method of claim 11, wherein the reagent container comprises a positive control vessel having a pierceable cap attached thereto, and wherein said step (a) of preparing the analysis sample comprises, preparing a positive control reaction mixture in the reaction vessel by the liquid handling device piercing the pierceable cap of the positive control vessel.

14. The method of claim 1, further comprising, after the step (c) is performed, discarding the reaction vessel by a crane module of the transport device.

15. The method of claim 1, wherein the step (b) comprises:
(b1) when preparing the analysis sample of the step (a) is completed, placing the transport device at a position capable of accommodating the reaction vessel;
(b2) mounting the reaction vessel on the transport device by the liquid handling device; and
(b3) transporting the mounted reaction vessel to the sample analysis unit by the transport device through a passage formed by the first local opening of the sample analysis unit and the second local opening of the sample preparation unit.

16. The method according to claim 15, wherein the step (b1) comprises:
(b10) sensing, by the transport device, a preparation complete signal recorded after completion of the analysis sample preparation step of the step (a), and moving the transport device.

17. The method according to claim 15, wherein the step (b2) comprises:
(b20) mounting, the reaction vessel on the transport device by the liquid handling device detecting a transport ready signal recorded by the transport device being positioned at a position where the reaction vessel is accommodable.

18. The method of claim 17, wherein the transport device comprises a position sensor, and the step (b2) comprises detecting, by the position sensor, that the transport device is positioned at a position where the reaction vessel is accommodable, and recording a transport preparation completion record according to the detection by the sensor.

19. The method according to claim 1, wherein the sample analysis unit comprises a sample analysis device, and the transporting step of the step (b) comprises:
(b4) transporting the reaction vessel from the sample preparation unit to the sample analysis unit by a transport device through the passage formed by the first local opening of the sample analysis unit and the second local opening of the sample preparation unit; (b5) preparing the reaction vessel to be accommodated by the sample analysis device when the transport device is located at a position where the reaction vessel can be transported to the sample analysis device; and (b6) mounting the reaction vessel to the sample analysis device by the transport device.

20. The method according to claim 19, wherein the step (b5) comprises:
(b50) detecting, by the sample analysis device, a transport ready signal recorded when the transport device is located at a position where the reaction vessel is capable of being transported to the sample analysis device, and preparing for accommodation of the reaction vessel.

21. The method of claim 19, wherein the step (b6) comprises
(b60) detecting, by the transport device, an accommodation ready signal recorded when the sample analysis device is in a state of being capable of receiving the reaction vessel, and mounting the reaction vessel on the sample analysis device.
